# EUROPÄISCHE PATENTANMELDUNG

(11) **EP 3 822 232 A1**
(43) Veröffentlichungstag der Anmeldung: **19.05.2021**
(21) Anmeldenummer: 19208670.0
(22) Anmeldetag: 12.11.2019
(51) Int. Cl.: C02F 1/66, C02F 1/50, C02F 103/02, C02F 103/18

(54) **VERFAHREN ZUM SCHUTZ VON BRAUCHWASSER VOR MIKROBIELLER BELASTUNG**

(71) Anmelder: Weidner Wassertechnik GmbH, 45699 Herten (DE)
(72) Erfinder: Nachstedt, Klaus, 30989 Gehrden (DE); Heimann, Noah, 67434 Neustadt an der Weinstraße (DE)
(74) Vertreter: Freiherr von Foullon, Alexander

(57) **Zusammenfassung**

Es werden ein Verfahren zum Schutz von Brauchwasser, insbesondere Brauchwassersystemen, vor mikrobieller Belastung, insbesondere in Abluftreinigungsanlagen sowie eine diesbezügliche Vorrichtung, insbesondere zum Einbau in bzw. Anbau an Abluftreinigungsanlagen, beschrieben.

## Beschreibung

Die vorliegende Erfindung betrifft das technische Gebiet der Wassertechnik, insbesondere der Behandlung von Brauch- bzw. Nutzwasser.

Insbesondere betrifft die vorliegende Erfindung ein Verfahren zum Schutz von Brauchwasser, insbesondere Brauchwassersystemen, vor mikrobieller Belastung, insbesondere in Abluftreinigungsanlagen.

Des Weiteren betrifft die vorliegende Erfindung eine Vorrichtung zum Schutz von Brauchwasser, insbesondere Brauchwassersystemen, vor mikrobieller Belastung, insbesondere zum Einbau in bzw. Anbau an Abluftreinigungsanlagen, sowie eine entsprechende Anlage, die eine solche Vorrichtung aufweist.

Die Abluft aus industriellen Produktions- und Verarbeitungsprozessen weist häufig eine erhebliche Belastung mit umweltgefährdenden Schadstoffen, wie bspw. Fluor-, Chlor- oder Bromwasserstoff, Ammoniak, nitrosen Gasen oder schwefligen Gasen, auf. Gleichermaßen werden im Rahmen einer Vielzahl industrieller Prozesse gesundheitsbedenkliche Stäube oder Schwebstoffe erzeugt, welche sich ebenfalls über die Luft bzw. Abluft einer Anlage verbreiten können. Bevor die Abluft solcher Industrieanlagen also in die Umwelt abgegeben werden kann, müssen die darin enthaltenen Schadstoffe zunächst entfernen werden.

Um eine entsprechende Qualität und Reinheit der Abluft aus industriellen Prozessen zu erreichen und insbesondere auch diesbezügliche, gesetzlich geforderte Grenzwerte verlässlich einzuhalten, werden Abluftreinigungsanlagen eingesetzt. Eine Reinigung von Abluft kann dabei, je nach Schadstoffbelastung der Abluft, auf verschiedene Weisen erreicht werden. Die weitaus meisten Abluftreinigungsanlagen bzw. Luftwäscher werden hierbei für Absaugungen von Stäuben, Schwebstoffen und Gerüchen bspw. an Schweißplätzen, Lackierplätzen und -kabinen sowie sonstigen Prozess- und Werkstätten eingesetzt.

Es existieren hierbei je nach Anforderung an die Abluftreinigung unterschiedliche Abluftreinigungsanlagen, die mittels thermischer, separativer, sorptiver oder katalytischer Verfahren eine Abluftreinigung erreichen.

Im Rahmen von thermischen sowie katalytischen Abluftreinigungsverfahren erfolgt dabei prinzipiell eine Verbrennung der Schadstoffe. Separationsverfahren sind für die Abtrennung fester Bestandteile aus der Abluft geeignet. Sorptive Verfahren erlauben ein adsorptives oder absorptives Entfernen von insbesondere gasförmigen Schadstoffen aus einem Abgasstrom.

Generell beruhen sorptive Abluftreinigungsverfahren darauf, dass ein mit Schadstoffen belasteter Abluftstrom entlang eines Mediums bzw. durch ein Medium geleitet wird, an bzw. in dem die Schadstoffe besser gebunden, d. h. adsorbiert, oder gelöst, d. h. absorbiert, werden können als in der Abluft.

Verfahren, die auf adsorptiven Vorgängen beruhen, verwenden dazu in der Regel Zeolithe oder Aktivkohle als feste, adsorbierende Oberflächen. Die Eignung adsorptiver Verfahren ist jedoch begrenzt und insbesondere Abluftströme, welche säurebildende oder basische Gase enthalten, erfordern absorptive Reinigungsverfahren.

Bei absorptiven Reinigungsverfahren liegt das Medium bzw. Absorbens in flüssiger sowie üblicherweise wässrig-basierter Form vor. Zudem werden dem Medium für gewöhnlich weitere, neutralisierende Chemikalien zugesetzt. Die säurebildenden oder basischen Gase werden in dem flüssigen Medium nun zunächst gelöst und daraufhin unter Bildung der entsprechenden Salze neutralisiert.

Ein typischer praktischer Anwendungsfall eines solchen absorptiven Abluftreinigungsverfahrens ist die sogenannte Gaswäsche, welche in Nasswäschern- auch Nassabscheider oder Gaswäscher genannt - durchgeführt wird und im Zuge derer unerwünschte Abluftschadstoffe oder Nebenprodukte von Verbrennungsprozessen, wie zum Beispiel Schwefeldioxide, Halogene, Halogensäuren oder Ammoniak, sowie auch bedenkliche Stäube und ähnliche Schwebstoffe direkt aus der Prozessabluft, bspw. von Druckmaschinen oder Lackierkabinen, herausgewaschen werden.

Nasswäscher entsprechen in ihrem Aufbau und Funktionsprinzip in der Regel sogenannten Kolonnenwäschern. Unter einer Kolonne wird hierbei generell eine Anlage mit der Form einer hohen, schlanken Säule mit Einbauten, welche je nach Einsatzzweck der Kolonne gewählt bzw. erforderlich werden, verstanden.

Kolonnenwäscher, die für die Abluftreinigung ausgelegt sind, sind im Allgemeinen nun so aufgebaut, dass in der unteren Hälfte der Kolonne ein Einlass angeordnet ist, über den die schadstoff- bzw. schwebstoffbelastete Abluft in den Innenraum des Nasswäschers einströmen kann. Über der Einlassstelle ist die Waschkolonne angeordnet. Diese kann je nach Bauart des Nasswäschers weitere Einbauten, wie etwa ein Segment, das eine Schüttung spezieller Füllkörper enthält, aufweisen. Wiederum darüber ist ein Flüssigkeitsverteiler angeordnet, über den das flüssige Medium, d. h. die Waschflüssigkeit, in den Innenraum der Kolonne verteilt wird.

Das flüssige Medium bzw. die Waschflüssigkeit ist im häufigsten Falle Nutz- oder Brauchwasser, welchem je nach Bedarf weitere Chemikalien zugesetzt werden, die bspw. unter den jeweiligen Prozessbedingungen neutralisierend oder auch oxidierend wirken.

Die Waschflüssigkeit bzw. das Brauchwasser wird entgegengesetzt zur Strömungsrichtung des Abluftstroms in die Kolonne eingebracht, sodass die Abluft zwingend mit der Waschflüssigkeit in Kontakt kommt. Eine Durchmischung der Abluft mit der Waschflüssigkeit erfolgt bereits allein auf Grund des intensiven Luftstroms und der dadurch erfolgenden Verwirbelung der Flüssigkeit in der Kolonne. Auch ist ein sogenanntes Vortex-Prinzip bekannt, gemäß dem im Abluftstrom vorhandene Schwebstoff bzw. Partikel auf Grund der Fliehkraft an die Seitenwände der Kolonne wandern, wo sie dann in einen fallenden Flüssigkeitsstrom an der Kolonnenwandung eingewaschen werden. Durch zusätzliche Einbauten, wie etwa einem oder mehreren Segmenten mit Füllkörperschüttgut, können zusätzlich eine größere Stoffaustauschfläche geschaffen sowie Turbulenzen in der Abluftströmung erzeugt werden, sodass der Übergang von Schad- bzw. Schwebstoffen aus dem Abluftstrom in die Waschflüssigkeit erleichtert wird.

Die gereinigte Abluft steigt sukzessive weiter auf bis zum oberen Ende der Kolonne. Bevor die gereinigte Abluft die Kolonne hier verlässt, passiert sie in der Regel noch einen Tropfenabscheider, in dem restliche Tropfen der Waschflüssigkeit aus dem gereinigten Gas zurückgehalten werden.

Unterhalb der Einlassstelle für den zu reinigenden Abluftstrom befindet sich üblicherweise ein Auffang- oder Kreislaufbecken, in dem sich die eingesetzte Waschflüssigkeit sammelt. Über eine Leitung, die am unteren Ende des Nasswäschers angeordnet ist, kann die Waschflüssigkeit dann abgezogen und bspw. über ein Pumpensystem erneut zum Flüssigkeitsverteiler gefördert oder beim Durchlaufbetrieb gereinigt und an die Umwelt abgegeben werden.

Im Zuge des Waschvorgangs, insbesondere der Neutralisation von bspw. säurebildenden oder basischen Gasen der Abluft, bilden sich zunehmend Salze in der Waschlösung. Gleichermaßen können schlammartige Ablagerungen durch aus der Abluft herausgewaschene Schwebstoffe bzw. Partikel entstehen. Um nun einem Übersalzen bzw. Verschlammen der Waschflüssigkeit entgegenzusteuern, kann je nach Bedarf im Verlauf der Abluftreinigung ein Teil der Waschlösung ausgeschleust und durch frisches Brauchwasser ersetzt werden.

In kontinuierlich arbeitenden Anlagen, d. h. Anlagen im Durchlaufbetrieb, wird der pH-Wert der Waschlösung, insbesondere im Auffangbecken, üblicherweise im neutralen Bereich gehalten. Die Dosierung entsprechender Chemikalien zur Neutralisierung erfolgt daher bedarfsweise. Kontinuierlich arbeitende Anlagen sind kostenintensiv und wenig ressourcenschonend, insbesondere nicht wassersparend, im Betrieb. Sie werden daher nur bei starker Verschmutzung der Abluft, welche ein unmittelbares und kontinuierliches Aufbereiten der Abluft notwendig macht, eingesetzt.

Alternativ können Nasswäscher auch im Batchprozess betrieben werden. In diesem Fall wird der Waschlösung die entsprechende Chemikalie zur Neutralisation der Abluft in einer bestimmten Anfangskonzentration zugesetzt und nach und nach verbraucht, sodass die Waschlösung in regelmäßigen Zyklen komplett erneuert und der Nasswäscher gereinigt werden muss. Ungeachtet des ressourcenschonenderen Betriebs kann bei diesen Anlagen insbesondere der oft schnelle pH-Umschlag, der für die Neutralisation starker Säuren bzw. Basen typisch ist, problematisch sein und die Waschleistung sowie den Anlagenzustand stark beeinträchtigen.

Die generelle Betriebssicherheit von Nasswäschern, ob kontinuierlich oder als Batch, ist sehr positiv.

Allerdings kann von Nasswäschern, ebenso wie von Verdunstungskühlanlagen und Kühltürmen ein erhebliches gesundheitsgefährdendes Potential durch die Bildung sogenannter Bioaerosole ausgehen.

Der Begriff Bioaerosole bezieht sich dabei auf solche Aerosole, die mit Bakterien und ähnlichen Mikroorganismen, im Speziellen mit Legionellen, belastet sind. Die tatsächliche Gefahr, welche von Legionellen-belasteten Aerosolen ausgehen kann, zeigten wiederholte, größere Legionellose-Ausbrüche in den Jahren 2009/2010, 2013 sowie 2016.

Als Reaktion auf diese Vorfälle wurden zunächst die VDI-Richtlinien 2047 und 3679 zur Sicherstellung des hygienegerechten Betriebs von Verdunstungskühlanlagen sowie Nassabscheidern erarbeitet und als Grundlage für die am 19. August 2017 in Kraft getretene 42. Verordnung zur Durchführung des Bundes-Immissionsschutzgesetzes (auch: Verordnung über Verdunstungskühlanlagen, Kühltürme und Nassabscheider - 42. BlmSchV) verwendet.

Die 42. BlmSch-Verordnung umfasst dabei ein Regelwerk verschiedener Maßnahmen, die dazu beitragen sollen, eventuelle Gefahren durch erhöhte Bakterienkonzentrationen abzuwehren sowie einen ordnungsgemäßen, hygienischen Betrieb von u.a. Abluftreinigungsanlagen wie Nasswäschern zu gewährleisten. Hierzu enthält die Verordnung bspw. Parameter zu Grenzwertkonzentrationen für *Legionella* sowie diesbezügliche Maßnahmen zur Vermeidung erhöhter Bakterienkonzentrationen und Vorschriften zur regelkonformen sowie regelmäßigen Dokumentation von Bakterienkonzentrationen bzw. durchgeführten Maßnahmen. Der Betrieb von u.a. Gas- bzw. Nasswäschern ist in der Konsequenz deutlich arbeitsaufwändiger geworden.

Insbesondere dokumentations-, überwachungs- und anmeldepflichtig ist der Betrieb von Nasswäschern, die einem der folgenden Kriterien gemäß 42. BlmSchV nicht entsprechen:
- Das Nutzwasser und die Verrieselungsflächen weisen dauerhaft eine konstante Temperatur von 60 °C oder mehr auf.
- Das Nutzwasser hat dauerhaft einen pH-Wert von weniger als 4 oder einen pH-Wert von mehr als 10.
- Das Abgas wird nach Verlassen des Nasswäschers für mindestens 10 Sekunden auf mindestens 72 °C erhitzt, so dass sichergestellt ist, dass trockenes Abgas abgeleitet wird.
- Das Nutzwasser der Anlage hat dauerhaft eine Salzkonzentration von mehr als 100 g Halogenid je Liter.
- Der Betrieb der Anlage erfolgt ausschließlich mit Frischwasser im Durchlaufbetrieb.
- Die Anlage ist in einer Halle aufgestellt und emittiert in diese.

Herkömmliche Gas- bzw. Nasswäscher, insbesondere wenn sie im Batchbetrieb laufen, erfüllen diese Anforderung nicht. Die Betreiber der Nasswäscher sind dementsprechend verpflichtet, ein aufwändiges Dokumentationsprozedere durchzuführen. Dieses sieht vor, dass in einem 14-tägigen Rhythmus eine Probe des Nutzwassers im Nasswäscher zu entnehmen und die bakterielle Belastung der Nutzwasserprobe durch speziell geschultes Personal zu untersuchen und aufzuzeichnen ist. Darüber hinaus muss alle drei Monate eine Probe des Nutzwassers von einem externen Labor auf eine Belastung mit Mikroorganismen, insbesondere Legionellen, untersucht werden.

Insbesondere in größeren Industrieanlagen bzw. längeren Prozessketten, in welchen eine Vielzahl von Abgaswäschern betrieben werden, ergibt sich ein immenser Arbeits-, Zeit- sowie Dokumentationsaufwand.

Eine Lösung, die es ermöglichen würde, diesen Aufwand zu minimieren bzw. zu erübrigen, wäre dementsprechend wünschenswert.

Am Markt wird hierfür bisher lediglich eine Lösung in Form einer nachrüstbaren Vorrichtung angeboten, welche jedoch nur für die spezielle Anwendung in Kühlkreisläufen vorgesehen ist. Die Vorrichtung sieht eine Regulierung bzw. Minimierung der Keimbildung im Kühlkreislaufwasser auf Basis eines Elektrolysevorgangs, im Rahmen dessen ein Biozid generiert wird, vor.

Eine Übertragbarkeit dieses Konzepts auf Nasswäscher ist jedoch zumindest fraglich, wenn nicht gar gänzlich unpraktisch. Insbesondere kann nicht ausgeschlossen werden, dass aus den im Nutzwasser von Nasswäschern enthaltenen Chemikalien im Zuge einer Elektrolyse schädliche bzw. gefährliche Elektrolyseprodukte, wie bspw. Chlor- oder Wasserstoffgas, freigesetzt werden. Durch elektrolytisch erzeugtes Chlor können darüber hinaus auch umweltrelevante adsorbierbare organisch gebundene Halogene (AOX) gebildet werden. Dieses Risiko besteht insbesondere für Nutzwasser- bzw. Brauchwasseranlagen, in denen im Rahmen der Abgasreinigung erhöhte Salzkonzentrationen durch die Neutralisation von Prozessabgasen anfallen.

Es fehlt im Stand der Technik somit an geeigneten Verfahren bzw. Vorrichtungen, die in geregelter Weise den sicheren, hygienegerechten Betrieb von Abluftreinigungsanlagen, insbesondere Nasswäschern, ermöglichen und insbesondere gewährleisten, dass Aerosole aus diesen Abluftreinigungsanlagen dauerhaft unbedenklich, d. h. garantiert frei von gesundheitsbedenklichen Keimen und anderen Mikroorganismen, sind.

Darüber hinaus fehlen im Stand der Technik solche Verfahren bzw. Vorrichtungen, die den Betrieb von Abluftreinigungsanlagen, wie bspw. Nasswäschern, in Bezug auf den Dokumentations- und Maßnahmenaufwand unter Einhaltung der gesetzlichen Vorgaben überschaubar und effizient gestalten.

Eine Aufgabe der vorliegenden Erfindung ist somit darin zu sehen, die zuvor genannten, mit dem Stand der Technik verbundenen Nachteile und Probleme zu vermeiden, zumindest jedoch abzuschwächen.

Insbesondere ist eine Aufgabe der vorliegenden Erfindung somit darin zu sehen, ein Verfahren sowie eine Vorrichtung bereitzustellen, die den sicheren, zuverlässigen und benutzerfreundlichen Betrieb von Abluftreinigungsanlagen, insbesondere Gaswäschern bzw. Nasswäschern, gewährleisten.

Darüber hinaus ist es eine Aufgabe der vorliegenden Erfindung, ein Verfahren bereitzustellen, dass unkompliziert in verschiedene Abluftwäscheprozesse integriert werden kann. In diesem Sinne ist es eine weitere Aufgabe der vorliegenden Erfindung, eine Vorrichtung bereitzustellen, die mit den gängigen Abluftreinigungsanlagen, wie zum Beispiel Nasswäschern, des Standes der Technik kompatibel ist.

Nicht zuletzt ist es eine Aufgabe der vorliegenden Erfindung, ein Verfahren bereitzustellen, das gewährleistet, dass Aerosole aus Abluftreinigungsanlagen, insbesondere Nasswäschern, frei von Keimen und anderen Mikroorganismen und dementsprechend unbedenklich im Hinblick auf die Gesundheit sind.

Gegenstand der vorliegenden Erfindung gemäß einem ersten Aspekt der vorliegenden Erfindung ist somit ein Verfahren nach Anspruch 1; weitere vorteilhafte Ausgestaltung dieses Erfindungsaspektes sind Gegenstand der diesbezüglichen Unteransprüche.

Weiterer Gegenstand der vorliegenden Erfindung gemäß einem zweiten Aspekt der vorliegenden Erfindung ist eine Vorrichtung nach Anspruch 11; weitere vorteilhafte Ausgestaltung dieses Erfindungsaspektes sind Gegenstand der diesbezüglichen Unteransprüche.

Schließlich weiterer Gegenstand der vorliegenden Erfindung gemäß einem dritten Aspekt der vorliegenden Erfindung ist eine Anlage nach Anspruch 15.

Es versteht sich von selbst, dass Besonderheiten, Merkmale, Ausgestaltungen und Ausführungsformen sowie Vorteile oder dergleichen durch die nachfolgend - zu Zwecken der Vermeidung von unnötigen Wiederholungen - nur zu einem Erfindungszweck ausgeführt werden, selbstverständlich in Bezug auf die übrigen Erfindungsaspekte entsprechend gelten, ohne dass es einer ausdrücklichen Erwähnung bedarf.

Zudem gilt, dass alle im Folgenden genannten Werte- oder Parameterangaben oder dergleichen grundsätzlich mit genormten bzw. standardisierten oder explizit angegebenen Bestimmungsverfahren oder mit dem Fachmann auf diesem Gebiet an sich geläufigen Bestimmungsmethoden ermittelt bzw. bestimmt werden können.

Darüber hinaus versteht es sich von selbst, dass alle gewichts- oder mengenbezogenen Prozentangaben vom Fachmann derart ausgewählt werden, dass in der Summe 100% bzw. 100 Gew.-% resultieren; dies versteht sich jedoch von selbst.

Dies vorausgeschickt wird im Folgenden die vorliegende Erfindung näher beschrieben.

Gegentand der vorliegenden Erfindung ist somit - gemäß einem **ersten** Aspekt der vorliegenden Erfindung - ein Verfahren zum Schutz von Brauchwasser, insbesondere Brauchwassersystemen, vor mikrobieller Belastung, insbesondere in Abluftreinigungsanlagen, wobei der pH-Wert des Brauchwassers auf einen pH-Wert von weniger als pH 4 oder mehr als pH 10 eingestellt wird.

Denn, wie die Anmelderin überraschenderweise herausgefunden hat, kann mit Hilfe des erfindungsgemäßen Verfahrens auf besonders effiziente, benutzerfreundliche und leicht umsetzbare Weise sichergestellt werden, dass das Nutz- bzw. Brauchwasser, insbesondere aus Abluftreinigungsanlagen, wie bspw. Nasswäschern, sowie eventuelle aus diesen hervorgehende Aerosole frei von Keimen, insbesondere Legionellen, und anderen Mikroorganismen sind bzw. bleiben. Damit ermöglicht das erfindungsgemäße Verfahren einen hygienisch einwandfreien Betrieb von Brauch- bzw. Nutzwassersystemen sowie deren Zirkulationssystemen, insbesondere in Abluftreinigungsanlagen. Weiterhin trägt das erfindungsgemäße Verfahren maßgeblich dazu bei, die potentiellen Gesundheitsgefahren, die von Abluftreinigungsanlagen bzw. den aus diesen Anlagen entweichenden Aerosolen ausgehen, drastisch zu minimieren.

Dabei wird mit Hilfe des erfindungsgemäßen Verfahrens insbesondere zunächst die Bildung von Biofilmen, insbesondere durch Bakterien wie Legionellen, in den betreffenden Anlagen sicher vermieden bzw. unterbunden, indem auf einfache und effiziente Weis ein lebensfeindliches Milieu für Mikroorganismen geschaffen wird. Auf diese Weise ist auch eine Weiterverbreitung der Bakterien in die Umwelt, insbesondere über Aerosole, die aus der Abluftreinigung hervorgehen, auszuschließen. Hierdurch wird letztlich die Betriebssicherheit für Abluftreinigungsanlagen deutlich gesteigert und gleichzeitig wiederum ein effizienterer Betrieb der Anlagen möglich. Insbesondere erlaubt das erfindungsgemäße Verfahren auch eine Verringerung des Dokumentations- und Überwachungsaufwandes für Abluftreinigungsanlagen.

Ein weiterer vorteilhafter Effekt besteht auch darin, dass auf Grundlage des erfindungsgemäßen Verfahrens das Risiko für Verblockungen oder Verstopfungen, bspw. durch eine eventuelle Algen- oder Keimkoloniebildung, von insbesondere empfindlichen Bauteilen minimiert werden kann. Dies trägt wiederum zur Betriebssicherheit von Brauch- bzw. Nutzwassersystemen sowie deren Zirkulationssystemen, bspw. in Abluftreinigungsanlagen, bei.

Auf Grund der speziellen Einstellung des pH-Wertes auf Werte von weniger als pH 4 oder mehr als pH 10 kann im Rahmen des erfindungsgemäßen Verfahrens dabei in vorteilhafter Weise im Allgemeinen auf den Einsatz von umweltbelastenden Bioziden verzichtet werden. Lediglich in Not- bzw. Störungsfällen kann eine Bioziddosierung vorzugsweise ergänzend durchgeführt werden.

Ein weiterer Vorteil der vorliegenden Erfindung ist darin zu sehen, dass das erfindungsgemäße Verfahren mit verschiedenen gängigen Abluftreinigungsprozessen, insbesondere in Nasswäschern, kompatibel ist und bedarfsgerecht angepasst werden kann. Der hygienegerechte Betrieb von insbesondere Abluftreinigungsanlagen, wie z. B. Nasswäschern, wird allein durch die erfindungsgemäße Wahl bzw. Einstellung des pH-Wertes sicher sowie dauerhaft und verlässlich gewährleistet. Die konkrete Wahl des pH-Einstellmittels kann dazu in vorteilhafter Weise an die jeweiligen Erfordernisse angepasst werden. Gängige und bereits in Betrieb befindliche Abluftreinigungsanlagen, insbesondere Nasswäscher, können einfach und kostengünstig nachgerüstet oder modifiziert werden, damit das erfindungsgemäße Verfahren durchgeführt werden kann. Dies bedeutet, dass auch die mikrobielle Belastung bei Bestandsanlagen auf sehr einfache Art und Weise sowie kostengünstig kontrolliert und in einem hygienisch einwandfreien Bereich gehalten werden kann.

Darüber hinaus geht das erfindungsgemäße Verfahren mit einer Steigerung der Prozesssicherheit, insbesondere bei der Reinigung von schadstoffbelasteter Abluft, einher. Durch die erfindungsgemäße Verfahrensführung bei konstant saurem oder basischem pH-Wert ist zu jeder Zeit sichergestellt, dass das Brauchwasser bzw. die Waschflüssigkeit genügend konzentriert ist, um bspw. säurebildende bzw. basische Gase dauerhaft sicher aus einem Abluftstrom herauszuwaschen.

Weiterhin kann durch das erfindungsgemäße Verfahren, insbesondere wenn dieses bei basischen pH-Werten durchgeführt wird, ein zusätzlicher Korrosionsschutz für bspw. Nasswäscher erreicht werden. Durch die Verfahrensführung bei basischem pH kann eine zusätzliche Passivierung von Eisen- bzw. Stahlbauteilen einer Anlage bewirkt werden, sodass diesen eine höhere Beständigkeit gegenüber Korrosion verliehen wird. Bevorzugt wird im Rahmen der vorliegenden Erfindung daher ein pH-Wert von mehr als pH 10 eingestellt.

Darüber hinaus wird es mit dem erfindungsgemäßen Verfahren möglich, insbesondere Abluftreinigungsanlagen, wie bspw. Nasswäscher, im Batch-Betrieb ohne die üblicherweise vorgesehene aufwändige und gesetzlich vorgeschriebene Dokumentation und häufigen Untersuchung des Nutz- bzw. Brauchwassers sicher und regelkonform zu betreiben. Auf diese Weise kann eine wertvolle Zeitersparnis sowie Arbeitsentlastung für die Betreiber von Abluftreinigungsanlagen wie Nasswäschern erreicht werden. Des Weiteren kann durch den verminderten Dokumentations- und Untersuchungsbedarf auch eine erhebliche Kosteneinsparung erzielt werden.

Nicht zuletzt kann das erfindungsgemäße Verfahren weitestgehend automatisiert durchgeführt und insbesondere so gesteuert werden, dass der pH-Wert regelmäßig bedarfs- bzw. vorgabengerecht reguliert wird, d. h. es ist bevorzugt, wenn nur so viel eines pH-Einstellmittels dosiert wird, wie nötig ist, um den vorgegebenen pH-Wert konstant oder in einem vorgegebenen Intervall zu halten. Auf diese Weise kann das erfindungsgemäße Verfahren in seiner Effizienz weiter gesteigert und sparsam in Bezug auf den Verbrauch von Chemikalien durchgeführt werden.

Es wird dabei im Rahmen der vorliegenden Erfindung unter Brauchwasser bzw. Nutzwasser Wasser verstanden, welches einer spezifischen technischen, gewerblichen, landwirtschaftlichen oder hauswirtschaftlichen Anwendung dient. Insbesondere werden die Begriffe Brauchwasser bzw. Nutzwasser im Rahmen der vorliegenden Erfindung synonym verstanden und können darüber hinaus auch als mögliche Bezeichnung für sogenanntes Betriebswasser aufgefasst werden. Das Brauchwasser ist dabei nicht zwangsweise für den menschlichen Verzehr bzw. Genuss vorgesehen, sollte jedoch einer gewissen Mindesthygiene entsprechen. In jedem Fall ist es im Rahmen der vorliegenden Erfindung vorgesehen, dass das Brauchwasser den technologischen Anforderungen der betroffenen Prozesse genügt, wozu bspw. auch eine gewisse Aufreinigung des Wassers notwendig sein kann.

Dementsprechend wird im Rahmen der vorliegenden Erfindung der Begriff Brauchwassersystem gleichgesetzt mit den Begriffen Nutzwassersystem bzw. Betriebswassersystem. Unter einem Brauchwassersystem ist weiterhin ein solches System zu verstehen, in dem Brauch- bzw. Nutz- oder Betriebswasser das maßgebliche Prozessmedium darstellt. Entsprechende Systeme können dabei gleichermaßen Zirkulations- wie auch Durchflusssysteme sein, wobei Brauchwasserzirkulationssysteme bevorzugt sind. Insbesondere betrifft die vorliegende Erfindung dabei Brauchwassersysteme in Abluftreinigungsanlagen, wie bspw. Nasswäschern.

Darüber hinaus wird im Rahmen der vorliegenden Erfindung unter einer mikrobiellen Belastung von Brauchwasser insbesondere eine Belastung des Brauchwassers mit bakteriellen Erregern, speziell Legionellen, verstanden. Im Allgemeinen wird zur Feststellung einer mikrobiellen bzw. bakteriellen Belastung des Brauchwassers eine Bestimmung der Bakterienkoloniezahl je Milliliter bei 22 °C und 36 °C in einem bestimmten Wasserprobenvolumen vorgenommen. Die Koloniezahl kann dabei auch als koloniebildende Einheit bezeichnet werden. Grundsätzlich gilt, dass die Wasserqualität umso besser ist, d.h. die mikrobielle Belastung umso geringer ist, je niedriger die Koloniezahl bzw. koloniebildende Einheit im gemessenen Wasserprobenvolumen ausfällt.

Speziell für die Untersuchung einer Belastung von Brauch- oder auch Trinkwasser mit Legionellen ist jedoch ein deutliches aufwändigeres Prüfprotokoll vorgesehen, welches nach ISO 11731:1998 und DIN EN ISO 11731-2:2008 geregelt ist. Dazu wird die Wasserprobe in zwei Ansätze aufgeteilt und diese Ansätze werden parallel untersucht. Beim ersten, sogenannten Direktansatz wird die Wasserprobe halbiert, d. h. bspw. 1 mL Probenvolumen auf 0,5 mL aufgeteilt, und das Probenvolumen direkt auf zwei Petrischalen bzw. Platten mit einem definierten Nährmedium gegeben. Die Petrischalen bzw. Platten werden daraufhin zehn Tage im Brutschrank gezüchtet.

Der zweite Ansatz wird zunächst mittels Filtration sowie Säurepuffer-Behandlung und Waschen der Filtermembran aufgereinigt. Die behandelte Filtermembran wird dann ebenfalls auf Petrischalen bzw. Platten mit einem definierten Nährmedium gegeben, welche wiederum für 10 Tage im Brutschrank gezüchtet werden. Die Züchtung erfolgt bei konstanten Temperaturen um 36 °C.

Nach Ablauf der zehn Tage werden eventuell in der Wasserprobe vorhandene Legionellen in Form von Kolonien als helle Punkte auf dem typischerweise dunklen Nährmedium nachgewiesen. Diese Kolonien können dann ausgezählt und ausgewertet werden, wobei anhand der Koloniezahlen anschließend Werte für koloniebildende Einheiten/100 mL bestimmt bzw. berechnet werden. Es gilt wiederum, dass die Wasserqualität umso besser ist, je niedriger die Koloniezahl bzw. koloniebildende Einheit im gemessenen Wasserprobenvolumen ausfällt.

Im Rahmen der vorliegenden Erfindung wird es bevorzugt, wenn das Brauchwasser innerhalb eines geschlossenen oder quasi-geschlossenen Systems, insbesondere im Batch-Betrieb, verwendet wird. Dies bedeutet, dass das in einem Brauchwassersystem, wie bspw. einer Abluftreinigungsanlage, eingesetzte Brauchwasser über einen vorgesehen Einsatzzyklus immer wieder weiterverwendet wird und lediglich durch Aerosol-Bildung oder Verdampfung entstehende Wassermengendifferenzen mit Frischwasser aufgefüllt werden. Gerade die geschlossenen bzw. quasi-geschlossenen Systemen, welche im Batch-Betrieb gefahren werden, sind üblicherweise anfällig für mikrobielle Belastungen, da das Brauch- bzw. Nutzwasser über mehrere Tage bzw. Wochen in der Anlage verbleibt.

Im Rahmen der vorliegenden Erfindung hat es sich, wie zuvor dargelegt, bewährt, wenn der pH-Wert des Brauchwassers auf einen pH-Wert von kleiner bzw. weniger als pH 4, insbesondere pH 3,9, oder auf einen pH-Wert von größer bzw. mehr als pH 10, insbesondere pH 10,1, eingestellt wird.

Üblicherweise wird es hierbei im Rahmen der vorliegenden Erfindung bevorzugt, wenn der pH-Wert durch eine Steuerung oder Regelung, insbesondere einen Steuerungs- oder Regelungsvorgang, vorzugsweise einen zumindest im Wesentlichen automatisierten Steuerungs- oder Regelungsvorgang, eingestellt wird.

Unter einer Steuerung wird dabei im Rahmen der vorliegenden Erfindung eine gerichtete Beeinflussung des Verhaltens eines technischen Systems verstanden, wohingegen unter einer Regelung die gezielte Beeinflussung von physikalischen, chemischen oder anderen Größen des technischen Systems verstanden wird.

Die Steuerung, insbesondere der Steuerungsvorgang, kann im Rahmen der vorliegenden Erfindung auch als ereignisdiskreter Prozess bzw. als diskontinuierlicher Prozess aufgefasst werden. Hierzu sind entsprechende Steuergrößen, bspw. der pH-Wert des Brauchwassers, und Schwellenwerte, bspw. ein vorgegebener pH-Wert, festzulegen. Erreicht die Steuergröße, d. h. der pH-Wert des Brauchwassers, einen für sie vorgesehenen Schwellenwert, findet ein zuvor festgelegtes Ereignis statt und es erfolgt eine Änderung bzw. ein Umschalten eines in der Regel binären Stellsignals. Ein solches Ereignis kann bspw. ein Dosieren eines pH-Einstellmittels sein, welches über eine vorgegebene Zeitdauer oder bis zu einer vorab definierten Menge erfolgt.

Demgegenüber wird bei der Regelung, insbesondere einem Regelungsvorgang, eine definierte Regelgröße, bspw. der pH-Wert einer Lösung, konstant gemessen und kontinuierlich mit einer gewählten Führungsgröße, bspw. einem dem System vorgegeben pH-Wert, verglichen. Hieraus wird kontinuierliche eine Regelabweichung, bspw. in Form einer Differenz, bestimmt, aus welcher unter Berücksichtigung vorgegebener Regelparameter eine Stellgröße bestimmt wird. Diese Stellgröße wirkt über die Regelstrecke so auf die Regelgröße ein, dass die Regelabweichung trotz vorhandener Störgrößen minimiert wird und die Regelgröße, d. h. bspw. der tatsächlich vorliegende pH-Wert einer Lösung, je nach gewählten Kriterien ein gewünschtes Zeitverhalten annimmt.

Im Rahmen der vorliegenden Erfindung hat es sich weiterhin bewährt, wenn für die Einstellung des pH-Wertes ein Soll-pH-Wert festgelegt wird.

Im Rahmen der vorliegenden Erfindung stellt der pH-Wert also vorzugsweise die Steuer- bzw. Regelgröße dar und drückt der Soll-pH-Wert den gewünschten Wert dieser Steuer- bzw. Regelgröße aus.

Hierbei ist es erfindungsgemäß bevorzugt, wenn der Soll-pH-Wert weniger als pH 4, insbesondere weniger als pH 3,9, vorzugsweise weniger als pH 3,7, oder mehr als pH 10, insbesondere mehr als pH 10,1, vorzugsweise mehr als pH 10,3, beträgt.

Vorzugsweise beträgt somit der Soll-pH-Wert Werte kleiner pH 4, insbesondere kleiner oder gleich pH 3,9, vorzugsweise kleiner oder gleich pH 3,7, oder größer pH 10, insbesondere größer oder gleich pH 10,1, vorzugsweise größer oder gleich pH 10,3.

Besonders bevorzugt wird es im Rahmen der vorliegenden Erfindung, wenn der Soll-pH-Wert mehr als pH 10, insbesondere mehr als pH 10,1, vorzugsweise mehr als pH 10,3, beträgt.

In anderen Worten hat es sich bewährt, wenn der Soll-pH-Wert größer pH 10, insbesondere größer oder gleich pH 10,1, vorzugsweise größer oder gleich 10,3, beträgt. Im Speziellen bei basischen pH-Werten kann eine Korrosion von stahlbasierten Brauchwassersystemen, insbesondere Abluftreinigungsanlagen, ausgeschlossen werden, da diese bei basischen pH-Werten passiviert werden, wohingegen Stahl unter Umständen bei saurem pH-Wert angegriffen werden kann.

Im Rahmen der vorliegenden Erfindung hat es sich darüber hinaus bewährt, wenn für die Einstellung des pH-Wertes der pH-Wert des Brauchwassers, insbesondere mindestens ein Ist-pH-Wert des Brauchwassers, gemessen wird.

Unter dem Ist-pH-Wert ist dabei im Rahmen der vorliegenden Erfindung der zu einem bestimmten Zeitpunkt gemessene Wert des als Steuer- oder Regelgröße festgelegten pH-Wertes zu verstehen.

Hierbei hat es sich im Rahmen der vorliegenden Erfindung als vorteilhaft erwiesen, wenn der der pH-Wert des Brauchwassers, insbesondere der mindestens eine Ist-pH-Wert des Brauchwassers, an mindestens einer Messstelle, insbesondere diskontinuierlich, periodisch oder kontinuierlich, vorzugsweise periodisch oder kontinuierlich, gemessen wird, bevorzugt mittels, insbesondere mindestens, einer pH-Elektrode.

Gleichermaßen kann es im Rahmen der vorliegenden Erfindung jedoch vorzugsweise auch vorgesehen sein, dass der pH-Wert des Brauchwassers, insbesondere der mindestens eine Ist-pH-Wert des Brauchwassers, wie zuvor beschrieben, mittels, insbesondere mindestens, einem pH-Sensor bzw., insbesondere mindestens, einer kolorimetrischen bzw. fotometrischen oder volumetrischen pH-Bestimmung gemessen wird. Das erfindungsgemäße Verfahren ist demnach im Hinblick auf die Weise, wie der pH-Wert des Brauchwassers ermittelt wird, besonders flexibel und somit benutzerfreundlich, da die Messmethode variabel auf die jeweiligen spezifischen Bedingungen bzw. Anforderungen des Brauchwassersystems, insbesondere der Abluftreinigungsanlage, abgestimmt werden können.

Unter einer periodischen Messweise wird im Rahmen der vorliegenden Erfindung dabei eine Messung des pH-Wertes in vergleichsweise kleinen bzw. kurz aufeinander folgenden Zeitintervallen verstanden. Ein entsprechender Zeitintervall kann bspw. 45 Sekunden, insbesondere 30 Sekunden, vorzugsweise 20 Sekunden, betragen.

Unter einer kontinuierlichen Messweise wird im Rahmen der vorliegenden Erfindung ein laufendes Messen des pH-Wertes verstanden, d. h. der pH-Wert wird durchgängig oder quasi-durchgängig, also bspw. 1 Mal pro Sekunde, insbesondere 2 Mal pro Sekunde, vorzugsweise 1 Mal pro Zehntelsekunde, gemessen.

Im Rahmen der vorliegenden Erfindung ist hierbei üblicherweise eine pH-Wertbestimmung des Brauchwassers auf elektrochemischem Wege vorgesehen. Am weitesten verbreitet sowie erfindungsgemäß bevorzugt erfolgt die pH-Wert-Messung hierbei mittels einer Glaselektrode bzw. vergleichbar aufgebauten Elektrode.

Die Elektrode ist bevorzugt als sogenannte Einstabmessketten ausgebildet und aus einem inneren Rohr und einem äußeren Mantel aufgebaut. Der äußere Mantel dient üblicherweise als Referenzelektrode und enthält bspw. einen Silberdraht, Silberchlorid und eine Elektrolytlösung. Im inneren Rohr können sich ebenfalls bspw. ein Silberdraht, Silberchlorid und eine Elektrolytlösung befinden, die zusätzlich noch einen Puffer enthält. Das innere Rohr ist über eine Glasmembran mit der zu messenden Lösung verbunden sowie über ein Diaphragma mit dem äußeren Mantel. Im Rahmen der pH-Wert-Messung kann sich so ein Potential an der Glaselektrode ausbilden. Aus der Differenz des Potentials zur Bezugselektrode resultiert eine Spannung, an Hand derer weitestgehend linear der pH-Wert abbildet werden kann.

Anstelle einer Elektrolytlösung kann auch eine Gel-förmige Elektrolytfüllung verwendet werden. Gleichermaßen sind Elektroden mit fester Ableitung denkbar, bspw. aus Metall oder einem Polymer.

Gemäß einer alternativen Ausführungsform der vorliegenden Erfindung kann es auch vorgesehen sein, dass die pH-Wertbestimmung des Brauchwassers auf Basis der elektrischen Leitfähigkeit des Brauchwassers erfolgt. In diesem Falle wird es bevorzugt, wenn die pH-Wert-Messung mittels eines Ionensensitiven Feldeffekttransistors (ISFET) erfolgt.

Das Messprinzip des ISFET beruht auf einer Veränderung des Feldeffektes, welcher sich zwischen Source und Drain bildet. Am Gate wird eine ionensensitive, insbesondere pH-sensitive, Schicht (z. B. Al₂O₃, Si₃N₄, oder Ta₂O₅) aufgebracht, die direkt mit der zu messenden Flüssigkeit in Kontakt gebracht wird. Mittels einer Referenzelektrode wird eine Biasspannung angelegt, um den Arbeitspunkt des IS-FETs festzulegen. In Abhängigkeit von der lonenkonzentration in der untersuchten Lösung bildet sich ein zusätzliches Oberflächenpotential am Kontakt zwischen Lösung und ionensensitiver Schicht aus. Dieses Potential in Summe mit der Biasspannung bewirkt eine Änderung des Source-Drain-Stromes, die gemessen werden kann. Diese Änderungen ist direkt proportional zur Änderung der lonenkonzentration.

Zur Sicherstellung der Genauigkeit der pH-Wert-Messung wird es darüber hinaus im Rahmen der vorliegenden Erfindung bevorzugt, wenn die pH-Elektrode, insbesondere regelmäßig, kalibriert wird. Die diesbezüglichen Maßnahmen und Zeitabstände sind dem Fachmann jedoch hinreichend bekannt.

Weiterhin hat es sich im Rahmen der vorliegenden Erfindung bewährt, wenn für die Einstellung des pH-Wertes ein Toleranzbereich A, insbesondere in Form einer Differenz, vorzugsweise in einem Differenzbereich von 0 bis 0,3, insbesondere 0 bis 0,2, vorzugsweise 0 bis 0,1, zwischen dem Soll-pH-Wert und dem gemessenen pH-Wert, insbesondere dem Ist-pH-Wert, des Brauchwassers festgelegt wird.

In diesem Zusammenhang ist es weiterhin vorzugsweise vorgesehen, dass der Toleranzbereich A nur pH-Werte außerhalb eines absoluten pH-Wertbereichs von pH 4 oder mehr bzw. pH 10 oder weniger umfasst.

Generell wird im Rahmen der vorliegenden Erfindung unter einem Toleranzbereich ein Bereich verstanden, in dem eine Abweichung, insbesondere pH-Wertabweichung, von einer Führungsgröße, insbesondere vom Soll-pH-Wert, geduldet wird bzw. insbesondere durch die Einstellung, insbesondere Steuerung oder Regelung, akzeptiert wird. Das heißt, der Schwellenwert für den pH-Wert als Regelungs- bzw. Steuergröße wird erst mit Überschreiten des Toleranzbereichs A erreicht.

Es hat sich im Rahmen der vorliegenden Erfindung darüber hinaus als besonders vorteilhaft erwiesen, wenn für die Einstellung des pH-Wertes mindestens 2, insbesondere 2 bis 10, vorzugsweise 2 bis 5, bevorzugt 2, pH-Werte des Brauchwassers, insbesondere Ist-pH-Werte des Brauchwassers, gemessen werden.

Besonders bevorzugt ist es dabei, wenn die mindestens 2, insbesondere 2 bis 10, vorzugsweise 2 bis 5, bevorzugt 2, pH-Werte des Brauchwassers, insbesondere Ist-pH-Werte des Brauchwassers, an mindestens 2, insbesondere 2 bis 10, vorzugsweise 2 bis 5, bevorzugt 2, Messstellen, insbesondere periodisch oder kontinuierlich, gemessen werden, vorzugsweise mittels einer pH-Elektrode.

Gemäß dieser bevorzugten Ausführungsform der vorliegenden Erfindung beruht das erfindungsgemäße Verfahren also bevorzugt auf einer redundanten pH-Wert-Messung. Durch diese Verwendung eines redundanten pH-Wert-Messsystems bzw. -verfahrens kann im Rahmen der vorliegenden Erfindung nun eine besonders zuverlässige, genaue sowie wenig fehleranfällige Bestimmung des pH-Werts im Brauchwasser erfolgen. Mittels der wiederholten, d. h. redundanten, Messung des pH-Wertes im Brauchwasser wird vor allem auch eine besonders genaue Abbildung des pH-Wertes bzw. der pH-Wertentwicklung über die Zeit erreicht. Auf dieser Grundlage kann die Einstellung des pH-Wertes überaus genau und eng entlang der vorgegebenen Parameter erfolgen, während gleichzeitig das Potential für Messfehler deutlich verringert wird. Insbesondere kann mittels der redundanten pH-Wert-Messung auch ein eventueller kurzzeitiger Ausfall einer Elektrode überbrückt bzw. Messschwankungen relativiert werden. Auf diese Weise ist stets sichergestellt, dass die pH-Wertbestimmung exakt erfolgen kann, sodass auch eine zuverlässige sowie korrekte Einstellung, insbesondere Steuerung bzw. Regelung, der pH-Werte erreicht werden kann. Darüber hinaus ermöglicht eine redundante Bestimmung des pH-Werts die sofortige Erfassung oder auch Verhinderung von Betriebsstörungen, bspw. einen unbeabsichtigten Betrieb des Brauchwassersystems in pH-Wertbereichen von 4 bis 10 aufgrund einer defekten pH-Elektrode.

Weiterhin hat es sich im Rahmen der vorliegenden Erfindung bewährt, wenn für die Einstellung des pH-Wertes ein Toleranzbereich B, insbesondere in Form einer Differenz, vorzugsweise in einem Differenzbereich von 0 bis 0,3, insbesondere 0 bis 0,2, vorzugsweise 0 bis 0,1, zwischen den mindestens 2, insbesondere 2 bis 10, vorzugsweise 2 bis 5, bevorzugt 2, pH-Werten des Brauchwassers, insbesondere Ist-pH-Werten des Brauchwassers, festgelegt wird. Bei Überschreitung des Toleranzbereichs B kann dann bspw. ein Signal ausgelöst oder die Anlage gestoppt werden.

Hierzu hat es sich im Rahmen der vorliegenden Erfindung weiterhin bewährt, wenn für die Einstellung des pH-Wertes, insbesondere bei Messung von pH-Werten von pH 4 oder mehr bzw. pH 10 oder weniger, ein pH-Einstellmittel in das Brauchwasser, insbesondere diskontinuierlich, dosiert wird.

Alternativ kann es auch vorgesehen sein, dass für die Einstellung des pH-Wertes, insbesondere bei Messung von pH-Werten des Brauchwassers außerhalb des Toleranzbereichs A, ein pH-Einstellmittel in das Brauchwasser, insbesondere diskontinuierlich, dosiert wird.

Ein diskontinuierliches Dosieren des pH-Einstellmittels meint dabei im Rahmen der vorliegenden Erfindung ein Dosieren nach Bedarf, d. h. dann, wenn ein entsprechendes Ereignis durch die Einstellung, insbesondere Steuerung oder Reglung, festgestellt wird.

In diesem Sinne kann das Dosieren innerhalb eines bestimmten bzw. begrenzten Zeitraumes bspw. auch kontinuierlich erfolgen, solange bis die Einstellung, insbesondere Steuerung bzw. Regelung, eine Rückkehr in den Soll-pH-Wertbereich feststellt. Auch ist ein tendenziell periodisches Dosieren denkbar, wenn es bspw. zu kleineren Schwankungen des pH-Wertes kommen, die ein Dosieren innerhalb entsprechend kurz aufeinanderfolgender Intervalle auslösen.

Somit meint ein diskontinuierliches Dosieren des pH-Einstellmittels also lediglich ein bedarfsweises Dosieren und ist nicht als Beschränkung der Art und Weise der Zugabe bzw. des Eintrags des Dosiermittels in das Brauchwasser zu verstehen.

Weiterhin hat es sich als zweckmäßig erwiesen, wenn das pH-Einstellmittel an mindestens einer, vorzugsweise einer, Dosierstelle in das Brauchwasser, insbesondere diskontinuierlich, dosiert wird.

Darüber hinaus kann es erfindungsgemäß weiterhin vorgesehen sein, dass die Dosierung des pH-Einstellmittels über mindestens eine Pumpe, insbesondere eine Pumpe in Kombination mit einem Ventil, vorzugsweise über eine Dosierpumpe erfolgt. Somit kann im Rahmen der vorliegenden Erfindung eine besonders exakte sowie bedarfsgerechte Dosierung eines pH-Einstellmittels erreicht werden.

In Bezug auf das pH-Einstellmittel ist es im Rahmen der vorliegenden Erfindung nun üblicherweise bevorzugt, wenn das pH-Einstellmittel eine Säure oder Base ist.

Für die Auswahl geeigneter Säuren oder Basen kann der Fachmann dabei nun auf die ihm an sich bekannten Säuren oder Basen zurückgreifen. Besonders bewährt hat es sich im Rahmen der vorliegenden Erfindung jedoch, wenn die Säure ausgewählt ist aus der Gruppe von anorganischen Säuren, organischen Säuren, deren Mischungen, insbesondere Halogensäuren, Stickstoffsäuren, Phosphorsäuren, Schwefelsäuren, kurzkettigen Carbonsäuren, kurzkettigen Halogencarbonsäuren, deren Mischungen, vorzugsweise Salzsäure, Salpetersäure, Phosphorsäure, Schwefelsäure, Ameisensäure, Essigsäure, deren Mischungen.

Im Hinblick auf die Base hat es sich im Rahmen der vorliegenden Erfindung als vorteilhaft erwiesen, wenn die Base ausgewählt ist aus der Gruppe von anorganischen Basen, organischen Basen, deren Mischungen, insbesondere Alkalimetallhydroxiden, Erdalkalimetallhydroxiden, Alkalimetallhydrogencarbonaten, Alkalimetallcarbonaten, Erdalkalimetallcarbonaten, Stickstoffbasen, deren Mischungen, vorzugsweise Natriumhydroxid, Kaliumhydroxid, Calciumhydroxid, Natriumhydrogencarbonat, Kaliumhydrogencarbonat, Natriumcarbonat, Kaliumcarbonat, Calciumcarbonat, Ammoniak, Ammoniakwasser, deren Mischungen.

Was nun den Ablauf des Dosiervorgangs im Rahmen der vorliegenden Erfindung anbelangt, so ist es vorzugsweise vorgesehen, dass das Dosieren des pH-Einstellmittels in das Brauchwasser durch Verlassen des Toleranzbereichs A oder Erreichen eines absoluten pH-Werts von pH 4 oder mehr bzw. pH 10 oder weniger ausgelöst wird.

Gleichermaßen ist es bevorzugt vorgesehen, dass das Dosieren des pH-Einstellmittels in das Brauchwasser bei Erreichen eines pH-Wertes von weniger als pH 4 oder mehr als pH 10 beendet wird. Vorzugsweise ist es vorgesehen, dass das Dosieren des pH-Einstellmittels in das Brauchwasser bei Erreichen des Soll-pH-Wertes beendet und/oder bei Einhalten des Soll-pH-Wertes, insbesondere unter Berücksichtigung des Toleranzbereichs A, ausgesetzt wird.

Im Hinblick auf eine insbesondere möglichst exakte Einstellung des pH-Wertes hat es sich im Rahmen der vorliegenden Erfindung weiterhin als vorteilhaft bewährt, wenn für die Einstellung des pH-Wertes der Ist-pH-Wert des Brauchwassers mit dem Soll-pH-Wert verglichen wird, insbesondere mittels Ermittlung der Differenz zwischen Ist-pH-Wert und Soll-pH-Wert, vorzugsweise unter Einbezug des Toleranzbereichs A.

Für diese Ausführungsform der vorliegenden Erfindung bzw. besondere Form der Durchführung des erfindungsgemäßen Verfahrens kann es weiterhin vorgesehen sein, dass mittels des Vergleichswerts, insbesondere der Differenz, vorzugsweise unter Berücksichtigung des Toleranzbereichs A, zwischen Ist-pH-Wert des Brauchwassers und Soll-pH-Wert eine Rückkopplung, insbesondere unter Bildung einer zeitabhängigen Stellgröße, zur Einstellung, insbesondere Regelung, des pH-Wertes erfolgt.

In diesem Falle kann es erfindungsgemäß weiterhin vorgesehen sein, dass bei Ermittlung eines Vergleichswertes, insbesondere einer Differenz, zwischen Ist-pH-Wert und Soll-pH-Wert innerhalb des Toleranzbereichs A eine Gegenkopplung, insbesondere unter Bildung einer negativen Stellgröße, vorzugsweise mit Wirkung auf das Dosieren des pH-Einstellmittels in das Brauchwasser, erfolgt.

Gleichermaßen kann es dann vorgesehen sein, dass bei Ermittlung eines Vergleichswertes, insbesondere einer Differenz, zwischen Ist-pH-Wert und Soll-pH-Wert außerhalb des Toleranzbereichs A eine Mitkopplung, insbesondere unter Bildung einer positiven Stellgröße, vorzugsweise mit Wirkung auf das Dosieren des pH-Einstellmittels in das Brauchwasser, erfolgt.

Hierfür dient im Rahmen der vorliegenden Erfindung, wie bereits ausgeführt wurde, nun vorzugsweise der pH-Wert als Stellgröße. Erfindungsgemäß wird es für die Durchführung des Verfahrens dementsprechend bevorzugt, wenn der gemessene Ist-pH-Wert laufend mit dem Soll-pH-Wert abgeglichen und die sich ergebende Differenz auf die Führungsgröße, d.h. den der Einstellung, insbesondere Steuerung oder Regelung, vorgegebene (Soll-)pH-Wert, zurückgeführt wird. Wird nun eine Differenz, insbesondere außerhalb des Toleranzbereichs A, ermittelt, wird das erfindungsgemäße Verfahren vorzugsweise derart durchgeführt, dass aus dieser Differenz eine zeitabhängige Stellgröße, d.h. im Endeffekt eine zu dosierende Menge des pH-Einstellmittels, berechnet wird.

Ergibt sich also im Rahmen der vorliegenden Erfindung eine Differenz, die innerhalb des Toleranzbereichs A liegt, so resultiert eine Gegenkopplung bzw. eine negative Stellgröße, sodass effektiv durch die Steuerung bzw. Regelung veranlasst wird, dass weniger oder kein, vorzugsweise kein, pH-Einstellmittel in das Brauchwasser dosiert wird. Wird hingegen eine Differenz ermittelt, die außerhalb des Toleranzbereichs A liegt, so erfolgt eine Mitkopplung bzw. die Berechnung einer positiven Stellgröße, welche im Endeffekt eine Erhöhung der dosierten Menge des pH-Einstellmittels auslöst.

Diese Vorgänge erfolgen dabei insbesondere zumindest periodisch, vorzugsweise kontinuierlich, sodass die Steuerung bzw. Regelung insbesondere zumindest in vergleichsweise kurzen Zeitintervallen, vorzugsweise laufend, die Differenz aus den Vergleichswerten (Ist- und Soll-pH-Wert) ermittelt sowie dementsprechend die Dosierung des pH-Einstellmittels, insbesondere die dosierte Menge des pH-Einstellmittels, anpasst. Insbesondere maßgeblich limitierender Faktor für die Häufigkeit der Berechnung ist hierbei die Häufigkeit bzw. Frequenz, mit welcher die pH-Wertmessung erfolgt.

Was nun die genaue Art der Steuerung bzw. Regelung im Rahmen der vorliegenden Erfindung anbelangt, so kann diese aus einer Vielzahl gängiger Steuerungen bzw. Regelungen, die dem Fachmann an sich bekannt sind, ausgewählt sein. Bewährt hat es sich in diesem Zusammenhang jedoch insbesondere, wenn die Steuerung zur Dosierung des pH-Einstellmittels als eine Grenzwertsteuerung bzw. durch einen Grenzwertschalter durchgeführt wird.

Im Rahmen einer alternativen bevorzugten Ausführungsform der vorliegenden Erfindung kann es auch vorgesehen sein, dass die Regelung zur Dosierung des pH-Einstellmittels als eine P-Reglung bzw. durch einen P-Regler durchgeführt wird. Dabei wird im Rahmen der vorliegenden Erfindung unter einer P-Regelung bzw. einem P-Regler eine Regelung bzw. ein Regler mit rein proportionalen Regelstrukturen verstanden. Auch kann es im Rahmen der vorliegenden Erfindung vorgesehen sein, dass die Regelung zur Dosierung des pH-Einstellmittels als eine PI-Reglung bzw. durch einen PI-Regler oder als eine PD-Reglung bzw. durch einen PD-Regler durchgeführt wird. Diese Regelungen bzw. Regler weisen dann neben dem proportionalen auch eine integralen bzw. differenzialen Regelstrukturenanteil auf.

Es kann im Rahmen der vorliegenden Erfindung jedoch gleichermaßen auch bevorzugt sein, dass die Regelung zur Dosierung des pH-Einstellmittels als eine Totozonenreglung bzw. durch einen Totzonenregler, eine Dreipunktreglung bzw. einen Dreipunktregler oder eine Zweipunktreglung bzw. durch einen Zweipunktregler durchgeführt wird. Die diesbezügliche Auswahl kann dabei in vorteilhafterweise auf Grundlage der Benutzerbedürfnisse getroffen werden, sodass das erfindungsgemäße Verfahren hier eine besonders anwenderfreundliche Flexibilität und individuellen Gestaltungsfreiraum bietet. Hierbei sind die genannten Regelstrukturen dem Fachmann im Allgemeinen hinreichend bekannt, sodass dieser auch zielgerichtet je nach Bedarf eine Auswahl treffen kann.

Ganz besonders bevorzugt ist es im Rahmen der vorliegenden Erfindung im Hinblick auf eine insbesondere möglichst genaue, individuell anpassbare und weitestgehend automatisierte Regelung des pH-Wertes jedoch vorgesehen, dass die Regelung zur Dosierung des pH-Einstellmittels als eine PID-Reglung bzw. durch einen PID-Regler durchgeführt wird. Hierbei wird im Rahmen der vorliegenden Erfindung unter einer PID-Regelung bzw. einem PID-Regler eine Regelung bzw. ein Regler mit proportional-integral-differenzialen Regelstrukturen verstanden.

Insgesamt kann im Rahmen der vorliegenden Erfindung also eine besonders genaue und direkte Dosierung des pH-Einstellmittels erreicht werden, so dass der pH-Wert im Brauchwasser über die Zeit betrachtet weitestgehend konstant und insbesondere zu jeder Zeit zuverlässig im vorgegebenen bzw. durch den Benutzer gewünschten pH-Wertbereich gehalten werden kann.

Demgemäß kann es im Rahmen einer besonders bevorzugten Ausgestaltung des erfindungsgemäßen Verfahrens also vorgesehen sein, dass der pH-Wert des Brauchwassers auf einen pH-Wert von weniger als pH 4 oder mehr als pH 10, insbesondere durch eine Steuerung oder Regelung, eingestellt wird, wobei
a) in einem ersten Verfahrensschritt ein Soll-pH-Wert festgelegt wird,
b) in einem auf den ersten Verfahrensschritt folgenden zweiten Verfahrensschritt mindestens ein Ist-pH-Wert des Brauchwassers, insbesondere an mindestens einer Messstelle, gemessen wird, und
c) in einem auf den zweiten Verfahrensschritt folgenden dritten Verfahrensschritt, insbesondere bei Messung von pH-Werten von pH 4 oder mehr bzw. pH 10 oder weniger, ein pH-Einstellmittel in das Brauchwasser, insbesondere diskontinuierlich, vorzugsweise an mindestens einer Dosierstelle, dosiert wird.

Gemäß einer weiteren, bevorzugten Ausführung der vorliegenden Erfindung kann es außerdem vorgesehen sein, dass ein Biozid in das Brauchwasser, insbesondere diskontinuierlich, dosiert werden kann. Die Dosierweise entspricht hierbei also insbesondere zumindest im Wesentlich derjenigen des pH-Einstellmittels.

Es hat sich im Rahmen der vorliegenden Erfindung des Weiteren bewährt, wenn das Biozid an mindestens einer Dosierstelle in das Brauchwasser, insbesondere diskontinuierlich, dosiert wird.

Außerdem hat es sich als zweckdienlich erwiesen, wenn das Biozid ein Mikrobiozid, insbesondere ein Bakterizid, ist.

Unter einem Biozid wird dementsprechend im Rahmen der vorliegenden Erfindung eine Substanz verstanden die insbesondere eine antimikrobielle Wirkung, vorzugsweise eine antibakterielle Wirkung, aufweist.

Im Hinblick auf die Durchführung des erfindungsgemäßen Verfahrens ist es außerdem vorzugsweise vorgesehen, dass das Dosieren des Biozids in das Brauchwasser durch ein anhaltendendes Vorliegen, insbesondere über eine Zeitdauer von mehr als 5 min, insbesondere mehr als 15 min, vorzugsweise mehr als 30 min, eines pH-Werts von pH 4 oder mehr bzw. pH 10 oder weniger ausgelöst wird.

Gleichfalls kann es jedoch auch vorgesehen sein, dass die Zeitdauer, in welcher pH-Werte in Bereichen von pH 4 oder mehr bzw. pH 10 oder weniger toleriert werden, ohne dass eine Bioziddosierung ausgelöst wird, bedarfsweise eingestellt wird. Das heißt, es ist je nach den Anforderungen durch den Benutzer bzw. die Rahmenbedingungen, unter denen das erfindungsgemäße Verfahren durchgeführt wird, möglich, dass das Dosieren des Biozids in das Brauchwasser bspw. auch bereits innerhalb der ersten 5 min ab Vorliegen eines pH-Werts von pH 4 oder mehr bzw. pH 10 oder weniger ausgelöst wird.

In diesem Sinne ist es im Rahmen der vorliegenden Erfindung also vorzugsweise vorgesehen, dass das Biozid lediglich im Rahmen einer Störung in das Brauchwasser abgegeben wird. Auf diese Weise kann im Rahmen der vorliegenden Erfindung in sicherer sowie effizienter Weise gewährleistet werden, dass das Brauchwasser von insbesondere Abluftreinigungsanlagen wie bspw. Nasswäschern, zu jeder Zeit frei von Keimen, insbesondere Legionellen, und anderen Mikroorganismen bleibt und selbst im Falle einer Störung oder gar eines Ausfalls der Anlage sicher vor der Bildung von Mikroorganismen geschützt ist.

Im Rahmen dieser Ausführungsform der vorliegenden Erfindung hat es sich weiterhin bewährt, wenn das Dosieren des Biozids in das Brauchwasser bei Erreichen einer wirksamen, insbesondere antimikrobiell wirksamen, vorzugsweise antibakteriell wirksamen, Konzentration des Biozids im Brauchwasser beendet wird.

Hierbei kann die wirksame Konzentration im Brauchwasser je nach verwendetem Biozid variieren, d.h. je aggressiver bzw. effektiver das Biozid wirkt, desto geringer kann dessen Konzentration im Brauchwasser gewählt werden. Für die Einstellung der wirksamen Konzentration ist darüber hinaus das Volumen, insbesondere des Brauchwassers, maßgeblich. Dementsprechend hat es im Rahmen der vorliegenden Erfindung als zweckmäßig erwiesen, wenn die erforderliche einzusetzende Menge des Biozids in Abhängigkeit vom Gesamtvolumen des Brauchwassers, insbesondere in einer Abluftreinigungsanlage wie bspw. einem Nasswäscher, individuell bestimmt bzw. berechnet wird. Die entsprechend berechnete erforderliche Menge kann dann bspw. in einem Vorratsbehältnis vorgehalten und, im Falle einer Störung oder eines Ausfalls der Anlage, zuverlässig über die Dosierstelle dosiert werden.

Hierfür hat es sich im Rahmen der vorliegenden Erfindung weiterhin als vorteilhaft erwiesen, wenn das Dosieren des Biozids mit einem Volumenstrom von 1 bis 25 L/h, insbesondere 5 bis 20 L/h, vorzugsweise 10 bis 15 L/h, erfolgt. Generell ist es in diesem Zusammenhang weiterhin von Vorteil, wenn der tatsächlich notwendige Volumenstrom auf die Größe und speziellen Eigenschaften des Brauchwassersystems, wie bspw. eines Nasswäschers, abgestimmt wird.

Gemäß einer weiter bevorzugten Ausführungsform der vorliegenden Erfindung kann es weiterhin vorgesehen sein, dass für das Dosieren, insbesondere das Auslösen des Dosierens, des Biozids in das Brauchwasser der Ist-pH-Wert des Brauchwassers mit dem Soll-pH-Wert verglichen wird, insbesondere mittels Ermittlung der Differenz zwischen Ist-pH-Wert und Soll-pH-Wert, vorzugsweise unter Einbezug eines pH-Wertgrenzbereichs im Bereich von mehr als pH 4 oder weniger als pH 10 und eines Zeitdauergrenzbereichs von mehr als 5 min, insbesondere mehr als 15 min, vorzugsweise mehr als 30 min.

Speziell hat es sich für diese Ausführungsform bzw. Form der Durchführung des erfindungsgemäßen Verfahrens bewährt, wenn bei Dosieren, insbesondere Auslösen des Dosierens, des Biozids in das Brauchwasser eine Rückkopplung zur Einstellung, insbesondere Regelung, erfolgt.

In diesem Zusammenhang kann es weiterhin vorgesehen sein, dass die Rückkopplung ein Dosierung des Biozids bis zum Erreichen einer wirksamen, insbesondere antimikrobiell wirksamen, vorzugsweise antibakteriell wirksamen, Konzentration des Biozids im Brauchwasser und anschließend ein Abschalten, insbesondere Notabschalten, vorzugsweise des Brauchwassersystems, bevorzugt der Abluftreinigungsanlage, und/oder ein Warnsignal auslöst.

Im Rahmen einer weiteren besonders bevorzugten Ausgestaltung des erfindungsgemäßen Verfahrens kann es also wiederum vorgesehen sein, dass der pH-Wert des Brauchwassers auf einen pH-Wert von weniger als pH 4 oder mehr als pH 10, insbesondere durch eine Steuerung oder Regelung, eingestellt wird, wobei
a) in einem ersten Verfahrensschritt ein Soll-pH-Wert festgelegt wird,
b) in einem auf den ersten Verfahrensschritt folgenden zweiten Verfahrensschritt mindestens ein Ist-pH-Wert des Brauchwassers, insbesondere an mindestens einer Messstelle, gemessen wird, und
c) in einem auf den zweiten Verfahrensschritt folgenden dritten Verfahrensschritt, insbesondere bei Messung von pH-Werten von pH 4 oder mehr bzw. pH 10 oder weniger, ein pH-Einstellmittel in das Brauchwasser, insbesondere diskontinuierlich, vorzugsweise an mindestens einer Dosierstelle, dosiert wird,
und wobei optional ein Biozid in das Brauchwasser, insbesondere diskontinuierlich, vorzugsweise an mindestens einer Dosierstelle, dosiert wird, insbesondere wobei das Dosieren des Biozids in das Brauchwasser durch ein anhaltendendes Vorliegen, insbesondere über eine Zeitdauer von mehr als 5 min, eines pH-Wertes von pH 4 oder mehr bzw. pH 10 oder weniger ausgelöst wird.

Generell hat es sich im Rahmen der vorliegenden Erfindung außerdem bewährt, wenn das Brauchwasser kontinuierlich, insbesondere in einem Kreislauf, gefördert wird.

Im Rahmen der vorliegenden Erfindung wird unter dem Förderkreislauf insbesondere derjenige Kreislauf verstanden, in dem auch die Messungen des pH-Wertes sowie Dosierung des pH-Einstellmittels vorgenommen wird.

Hierfür hat es sich insbesondere bewährt, wenn das Brauchwasser kontinuierlich mittels mindestens einer Pumpe gefördert wird.

Gleichermaßen hat es sich bewährt, wenn die kontinuierliche Förderung des Brauchwassers kontrolliert wird, insbesondere mittels eines Durchflussmessers.

In diesem Fall hat es sich weiterhin als vorteilhaft erwiesen, wenn bei Feststellung einer diskontinuierlichen Förderung, insbesondere Messung einer Abnahme des Durchflusses, vorzugsweise über einen Zeitraum von 10 min, insbesondere 5 min, vorzugsweise 3 min, ein Warnsignal abgegeben wird und/oder eine Abschaltung, insbesondere der Pumpe, vorzugsweise des gesamten Brauchwassersystems und/oder der Abluftreinigungsanlage, erfolgt.

Gleichfalls kann es jedoch auch vorgesehen sein, dass die Zeitdauer, innerhalb welcher eine diskontinuierliche Förderung, insbesondere Messung einer Abnahme des Durchflusses toleriert werden, ohne dass ein Warnsignal abgegeben wird und/oder eine Abschaltung, insbesondere der Pumpe, vorzugsweise des gesamten Brauchwassersystems und/oder der Abluftreinigungsanlage, bedarfsweise eingestellt wird. Das heißt, dass die Zeiträume, bis zur Abgabe des Warnsignals bzw. der Abschaltung des Systems, in Abhängigkeit von individuellen Anforderungen und Gegebenheiten auch verlängert bzw. noch weiter verringert werden können.

Unter einer diskontinuierlichen Förderung des Brauchwassers wird dabei im Rahmen der vorliegenden Erfindung eine unvorhergesehene Schwankung der Förderrate bzw. des gemessenen Durchflusses verstanden, welche im Rahmen des Regelbetriebs nicht vorgesehen ist. Dementsprechend wird unter einer Abnahme des gemessenen Durchflusses ebenfalls eine unregelmäßige und außerplanmäßige Verringerung der Förderung verstanden.

Wird im Rahmen des erfindungsgemäßen Verfahrens also eine diskontinuierliche Förderung, insbesondere Messung einer Abnahme des Durchflusses, bspw. auf Grund eines Ausfalls einer Pumpe oder einer Verblockung einer Leitung, festgestellt, so kann durch die Einstellung, insbesondere Steuerung bzw. Regelung, direkt eine Notabschaltung der Anlage bzw. des Brauchwassersystems ausgelöst werden. Auf diese Weise wird ein vorteilhafter zusätzlicher Sicherheitsfaktor für das erfindungsgemäße Verfahren sowie die Anlange, in der es ausgeführt wird, geschaffen.

Nicht zuletzt ist es im Rahmen der vorliegenden Erfindung bevorzugt vorgesehen, dass sämtliche im Rahmen des Verfahrens erhobenen Messdaten bzw. Messwerte gespeichert werden. Auf diese Weise erlaubt das erfindungsgemäße Verfahren die zuverlässige Sicherung und lückenlose Dokumentation des Schutzes des Brauchwassers vor mikrobieller Belastung.

In diesem Zusammenhang kann es insbesondere vorgesehen sein, dass spezielle Nutzer- und/oder Behördenfunktionalitäten vorgesehen sind. Unter Nutzer- bzw.

Behördenfunktionalität ist dabei zu verstehen, dass entweder der Nutzer, insbesondere der Betreiber des Brauchwassersystems, oder eine Behörde Zugriff auf die gesammelten bzw. gespeicherten Daten erhalten.

Besonders bevorzugt ist dabei sowohl eine Nutzer- als auch eine Behördenfunktionalität vorgesehen. Ein System mit einer Nutzer- und Behördenfunktionalität erlaubt sowohl dem Nutzer Zugriff auf die Daten, ermöglicht jedoch auch, dass zumindest in einem separaten und für den Nutzer nicht zugänglichen oder manipulierbaren Bereich die gesammelten bzw. gespeicherten Daten für Behörden verfügbar sind, so dass zwar einerseits der Nutzer über die Daten verfügen kann, andererseits Behörden jederzeit kontrollieren können, ob das Brauchwassersystem tatsächlich im pH-Bereich von weniger als pH 4 bzw. mehr als pH 10 betrieben wurde. Die einzelnen Funktionalitäten sind vorzugsweise mit unterschiedlichen Zugangsberechtigungen, wie bspw. Passwörtern, Codes etc. zugänglich.

Es zeigen die Figurendarstellungen gemäß
- Fig. 1:: einen Überblick über den Aufbau einer erfindungsgemäßen Vorrichtung zur Durchführung des Verfahrens nach der vorliegenden Erfindung.
- Fig. 2:: einen Überblick über den Aufbau einer erfindungsgemäßen Vorrichtung gemäß einer bevorzugten Ausführungsform zur Durchführung des Verfahrens nach der vorliegenden Erfindung.
- Fig. 3:: einen Überblick über den Aufbau einer erfindungsgemäßen Vorrichtung gemäß einer weiteren bevorzugten Ausführungsform zur Durchführung des Verfahrens nach der vorliegenden Erfindung.

Weiterer Gegenstand der vorliegenden Erfindung - gemäß einem **zweiten** Aspekt der vorliegenden Erfindung - ist eine Vorrichtung zum Schutz von Brauchwasser, insbesondere Brauchwassersystemen, vor mikrobieller Belastung, insbesondere zum Einbau in bzw. Anbau an Abluftreinigungsanlagen, wobei die Vorrichtung eine Einstelleinrichtung, insbesondere eine Steuerungs- oder Regelungseinrichtung, eine Einrichtung zur Messung eines pH-Wertes, und mindestens eine Einrichtung zur Dosierung eines pH-Einstellmittels aufweist.

Ein besonderer Vorteil der erfindungsgemäßen Vorrichtung besteht hierbei darin, dass die erfindungsgemäße Vorrichtung mit einer Vielzahl von Brauchwassersystemen, insbesondere Abluftreinigungsanlagen wie bspw. Nasswäschern, kompatibel ist. Vor allem kann die erfindungsgemäße Vorrichtung auch in bereits bestehende Systeme bzw. Anlagen integriert werden, sodass diese ohne erheblichen Aufwand so nachgerüstet werden können, dass ein sicherer, hygienegerechter und verlässlicher Betrieb der Anlagen gewährleistet werden kann.

Weiterhin ist es ein maßgeblicher Vorteil der erfindungsgemäßen Vorrichtung, dass die Anordnung und der Aufbau der Vorrichtung flexibel auf die Gegebenheiten durch die Anlage bzw. das System, an welche die Vorrichtung angebracht werden soll, sowie die Prozessführung in dem jeweiligen System bzw. der jeweiligen Anlage abgestimmt werden kann. Idealerweise kann die Vorrichtung bspw. sehr kompakt, insbesondere in Form einer Wandtafel, ausgebildet sein. Auf diese Weise kann die Vorrichtung selbst bei wenig verfügbarem Platz noch problemlos installiert werden.

Erfindungsgemäß hat es sich nun bewährt, wenn die Einstelleinrichtung, insbesondere die Steuerungs- oder Regelungseinrichtung, eine elektronische Datenverarbeitungseinrichtung, insbesondere einen PC, Notebook, Tablet-PC aufweist.

Weiterhin ist es vorteilhaft, wenn die Einstelleinrichtung, insbesondere die Steuerungs- oder Regelungseinrichtung, für die Festlegung von Führungsgrößen, Regelgrößen und Soll-Größen, die Messung von Ist-Größen, die Bestimmung von Regelabweichungen, insbesondere Differenzen, vorzugsweise innerhalb festlegbarer Toleranzbereiche, zwischen den Größen, die Erhebung und Speicherung von Messdaten sowie die Durchführung von vorab definierten Maßnahmen ausgelegt ist. In diesem Zusammenhang werden besonders gute Ergebnisse erhalten, wenn die Einstelleinrichtung, insbesondere die Steuerungs- oder Regelungseinrichtungen für die Durchführung des zuvor beschriebenen Verfahrens ausgelegt bzw. abgestimmt ist.

Hierbei hat es sich insbesondere im Hinblick auf die Steuerungseinrichtung als vorteilhaft bewährt, wenn die Steuerungseinrichtung einen Grenzwertschalter aufweist.

Im Rahmen einer alternativen bevorzugten Ausführungsform der vorliegenden Erfindung kann es wiederum vorgesehen sein, dass insbesondere die Regelungseinrichtung, vorzugsweise mindestens, einen Regler ausgewählt aus der Gruppe von P-Reglern, PD-Reglern, PI-Reglern, PDI-Reglern, Totzonenreglern, Dreipunktreglern, Zweipunktreglern aufweist.

In diesem Sinne ist die erfindungsgemäße Vorrichtung also besonders benutzerfreundlich und leicht zu bedienen. Maßgeblich von Vorteil ist hierbei, dass die Steuerung bzw. Regelung der Vorrichtung weitestgehend automatisiert ist, sodass lediglich ein paar wenige Parameter zur Konfigurierung der Vorrichtung festgelegt werden müssen, bevor diese dann im Regelfall weitestgehend selbstständig das erfindungsgemäße Verfahren, für dessen Ausführung die Vorrichtung insbesondere konzipiert ist, umsetzt.

Hierbei wird dabei im Rahmen der vorliegenden Erfindung unter vorab definierten Maßnahmen bspw. verstanden, dass bei Überschreitung eines vorgegebenen Schwellenwertes im Zuge einer Regelabweichung, insbesondere unter Berücksichtigung der festgelegten Toleranzbereiche, bspw. das Dosieren des pH-Einstellmittels ausgelöst oder aber auch ausgesetzt wird, eine Korrektur der Förderrate im Förderkreislauf vorgenommen oder gegebenenfalls eine Dosierung des Biozids eingeleitet wird.

Vorzugsweise wird die Einstelleinrichtung, insbesondere die Steuer- oder Regelungseinrichtung, über eine spezifische Software betrieben, insbesondere gesteuert oder geregelt.

Im Rahmen der vorliegenden Erfindung kann es darüber hinaus vorgesehen sein, dass die Vorrichtung mindestens 2, insbesondere 2 bis 10, vorzugsweise 2 bis 5, bevorzugt 2, Einrichtungen zur Messung des pH-Wertes aufweist.

Auf diese Weise kann eine besonders hohe Präzision und geringe Fehleranfälligkeit der erfindungsgemäßen Vorrichtung erreicht werden, sodass bspw. einzelne Fehlmessungen geringer ins Gewicht fallen und somit eine zuverlässige und zutreffende Abbildung des pH-Wertes gewährleistet und fehlerhafte Dosierungen des pH-Einstellmittels vermieden werden können.

Hierbei ist es insbesondere zweckdienlich, wenn die Einrichtung zur Messung des pH-Wertes, insbesondere mindestens, ein Mittel zur Messung des pH-Wertes aufweist.

In diesem Zusammenhang ist es bevorzugt, wenn das Mittel zur Messung des pH-Wertes ausgewählt ist aus pH-Elektroden, insbesondere Glas-pH-Elektroden, Feldeffekttransistoren, insbesondere Ionensensitiven Feldeffekttransistoren (ISFET), pH-Sensoren, Mitteln zur kolorimetrischen bzw. fotometrischen oder volumetrischen pH-Bestimmung, vorzugsweise eine pH-Elektrode ist.

Weiterhin hat es sich in Bezug auf das Mittel zur Messung des pH-Wertes als vorteilhaft erwiesen, wenn die pH-Elektrode eine integrierte Referenzelektrode und/oder eine integrierte Kalibration aufweist. Auf diese Weise kann die Richtigkeit der pH-Wertmessung bzw. eine Korrektur der pH-Elektrode bei Messabweichungen leicht und unkompliziert vorgenommen werden.

Des Weiteren kann es generell vorgesehen sein, dass die Einrichtung zur Messung des pH-Wertes, insbesondere mindestens, eine Messstelle aufweist.

Im Rahmen der vorliegenden Erfindung ist es dabei vorzugsweise vorgesehen, dass je Messstelle ein Mittel zur Messung des pH-Wertes angeordnet ist, d. h. an jeder Messstelle ist vorzugsweise ein Mittel zur Messung, insbesondere eine pH-Elektrode, angeordnet.

Des Weiteren hat es sich bewährt, wenn die Einrichtung zur Messung des pH-Wertes, insbesondere mindestens, ein Absperrmittel, insbesondere ein Ventil, aufweist. Hierdurch kann bspw. das Mittel zur Messung des pH-Wertes ohne großen Aufwand gegenüber der restlichen Vorrichtung abgesperrt werden, sodass Wartungs-, Reparatur- oder Austauscharbeiten leichter durchgeführt werden können. Gleichmaßen kann mit Hilfe des Absperrmittels der Durchfluss zur Messstelle bzw. zum Mittel zur Messung des pH-Wertes bei Bedarf reguliert, also verringert oder erhöht werden. Dazu handelt es sich vorzugsweise um ein Ventil, dass mit der Einstelleinrichtung so verknüpft werden kann, dass Regulierung, Öffnung oder Schließung des Ventils automatisch bzw. zumindest nicht manuell erfolgen können.

Üblicherweise hat es sich im Rahmen der vorliegenden Erfindung auch bewährt, wenn die Einrichtung zur Dosierung des pH-Einstellmittels, insbesondere mindestens, ein Mittel zur Dosierung des pH-Einstellmittels aufweist.

Hierfür kann es vorzugsweise vorgesehen sein, dass das Mittel zur Dosierung des pH-Einstellmittels eine Pumpe, insbesondere eine Dosierpumpe, ist.

Weiterhin hat es sich als vorteilhaft erwiesen, wenn die Einrichtung zur Dosierung des pH-Einstellmittels, insbesondere mindestens, eine Dosierstelle aufweist. Erfindungsgemäß ist es dabei vorzugsweise vorgesehen, dass das Mittel zur Dosierung des pH-Einstellmittels an der Dosierstelle angeordnet ist.

In diesem Zusammenhang ist es wiederrum vorzugsweise vorgesehen, dass die Einrichtung zur Dosierung des pH-Einstellmittels, insbesondere mindestens, ein Absperrmittel, insbesondere Ventil aufweist. Wiederum wird es hierbei bevorzugt, wenn das Absperrmittel, insbesondere Ventil, automatisch steuerbar ist und insbesondere automatisch geöffnet wird, vorzugsweise wenn eine Korrektur des pH-Wertes erforderlich ist.

Nicht zuletzt hat es sich als zweckdienlich erwiesen, wenn die Einrichtung zur Dosierung des pH-Einstellmittels, insbesondere mindestens, ein Mittel zur Bevorratung des pH-Einstellmittels aufweist.

Das Mittel zur Bevorratung kann dabei bspw. ein Vorratstank oder -kanister sein und ist vorzugsweis so ausgestaltet, dass dieser bspw. leicht gewechselt bzw. wieder befüllt werden kann. Erfindungsgemäß ist es also in vorteilhafter Weise vorgesehen, dass der Anschluss bzw. der Ausbau der Mittel zur Bevorratung leicht, schnell und ohne großen Aufwand, insbesondere auch ohne langwierige Unterbrechung des erfindungsgemäßen Verfahrens, an bzw. aus der Vorrichtung möglich ist.

Generell ist es weiterhin im Rahmen der vorliegenden Erfindung vorzugsweise vorgesehen, dass die Vorrichtung eine Durchflussleitung aufweist.

Für diesen Fall hat es sich weiterhin bewährt, wenn die Durchflussleitung als Verbindungselement zwischen den übrigen Einrichtungen der Vorrichtung ausgebildet ist. Dementsprechend hat es sich erfindungsgemäß also als vorteilhaft erwiesen, wenn die Vorrichtung einen Förderkreislauf bildet.

Im Rahmen einer speziellen Ausgestaltung der erfindungsgemäßen Vorrichtung kann es darüber hinaus vorgesehen sein, die Vorrichtung eine Einrichtung zur Dosierung eines Biozids aufweist.

Hierbei ist es ein Vorteil der erfindungsgemäßen Vorrichtung, dass der Aufbau der Einrichtung zur Dosierung des Biozids im Wesentlichen mit der Ausgestaltung der Einrichtung zur Dosierung des pH-Einstellmittels übereinstimmt. Damit werden eine vorteilhafte Vereinfachung bzw. wenig komplizierte Erweiterung der erfindungsgemäßen Vorrichtung ermöglicht, da im Wesentlichen baugleiche Einrichtungen verwendet und gleichzeitig für unterschiedliche Zwecke sowie unabhängig voneinander gesteuert eingesetzt werden können.

In diesem Sinne ist es im Rahmen dieser Ausführung der erfindungsgemäßen Vorrichtung bevorzugt, wenn die Einrichtung zur Dosierung des Biozids, insbesondere mindestens, ein Mittel zur Dosierung des Biozids aufweist.

In diesem Zusammenhang hat es sich weiterhin bewährt, wenn das Mittel zur Dosierung des Biozids eine Pumpe, insbesondere eine Dosierpumpe, ist.

Darüber hinaus ist es auch bevorzugt, wenn die Einrichtung zur Dosierung des Biozids, insbesondere mindestens, eine Dosierstelle aufweist.

Diesbezüglich hat es sich als weiterhin vorteilhaft erwiesen, wenn die Einrichtung zur Dosierung des Biozids, insbesondere mindestens ein Absperrmittel, insbesondere ein Ventil, aufweist.

Schließlich hat es sich außerdem bewährt, wenn die Einrichtung zur Dosierung des Biozids, insbesondere mindestens, ein Mittel zur Bevorratung des Biozids aufweist.

Der Aufbau und die Funktionsweise der Einrichtung zur Dosierung des Biozids entsprechen also im Wesentlicheren denen der Einrichtung zur Dosierung des pH-Einstellmittels bzw. Messung des pH-Wertes. Dementsprechend können auch die diesbezüglichen vorteilhaften Wirkungen der einzelnen, vergleichbaren Mittel der jeweiligen Dosiereinrichtungen in analoger Weise aufeinander übertragen werden.

Darüber hinaus ist es im Allgemeinen bevorzugt, wenn die Vorrichtung, insbesondere mindestens, zwei Anschlussstellen, vorzugsweise einen Zulauf und einen Ablauf, bevorzugt zum Anschluss an ein Brauchwassersystem, insbesondere eine Abluftreinigungsanlage, aufweist. Über diese kann die erfindungsgemäße Vorrichtung flexibel an ein Brauchwassersystem, insbesondere Abluftreinigungssystem wie bspw. einen Nasswäscher angeschlossen werden, ohne dass dazu weiterreichende bauliche Eingriffe in die Anlage bzw. das System notwendig sind.

Des Weiteren hat es sich grundsätzlich bewährt, wenn die Vorrichtung eine Fördereinrichtung aufweist. Dabei kann es vorzugsweise vorgesehen sein, dass die Fördereinrichtung eine Pumpe und/oder einen Durchflussmesser, aufweist.

Auch hat es sich als vorteilhaft erwiesen, wenn die Fördereinrichtung als Bestandteil der Durchflussleitung ausgebildet ist.

Alternativ kann es auch vorgesehen sein, dass die Fördereinrichtung Bestandteil des Brauchwassersystems, insbesondere eines Abluftreinigungssystems, ist. In diesem Fall ist die erfindungsgemäße Vorrichtung, bspw. an eine Förderleitung des Brauchwassersystems, in welchem das Brauchwasser im Kreislauf gefahren wird, angeschlossen. Dann benötigt die erfindungsgemäße Vorrichtung keine eigene Fördereinrichtung, insbesondere Pumpe.

Auch kann es vorgesehen sein, dass die erfindungsgemäße Vorrichtung weitere zusätzliche Einrichtungen wie Filter, bspw. zum Schutz der Fördereinrichtungen, insbesondere Pumpen, oder der Durchflussleitung vor Verblockungen durch Ablagerungen aufweist.

Gleichermaßen kann es auch vorgesehen sein, dass die Vorrichtung noch weitere, zusätzliche Dosierstellen zur Einspeisung verschiedener Hilfslösungen aufweist. Diese Hilfslösungen können bspw. dem Korrosionsschutz, der Härtestabilisierung des Brauchwassers oder der verstärkten Durchdringung von Biofilmen als sog. Biodispergatoren dienen und damit einen weiteren, vorteilhaften Beitrag zum sicheren Betrieb von Anlagen wie bspw. Nasswäschern leisten.

Darüber hinaus kann es vorgesehen sein, dass der Vorrichtung, insbesondere der Einrichtung zur Messung des pH-Werts, in einstellbaren Zeiträumen sogenannte Modellbänder mit bekannten und konstantem pH-Wert zur Kontrolle, insbesondere zur Kontrolle der Richtigkeit der pH-Anzeige, zugeführt werden. Die Zuführung erfolgt vorzugsweise für eine kurze Zeitdauer mit einer unkritischen Unterbrechung der Messung des Brauchwassers, insbesondere Unterbrechung des Messwasserstroms aus dem Nasswäscher.

Gelichmaßen kann es jedoch auch sein, dass der Vorrichtung, insbesondere der Einrichtung zur Messung des pH-Werts, in einstellbaren Zeiträumen pH-Pufferlösungen zur Überprüfung und ggf. automatischen, halbautomatischen oder manuellen Kalibrierung der Einrichtung zur Messung des pH-Werts zugeführt werden. Die Zuführung erfolgt vorzugsweise für eine kurze Zeitdauer mit einer unkritischen Unterbrechung der Messung des Brauchwassers, insbesondere Unterbrechung des Messwasserstroms aus dem Nasswäscher.

Darüber hinaus kann es vorgesehen sein, dass die Vorrichtung zusätzliche Sperreinrichtungen, insbesondere eine Absalzsperre, aufweist. Diese hat den besonderen Vorteil, dass eventuell in den Förderkreislauf dosiertes Biozid durch die Sperre zurückgehalten wird uns somit nicht in die Umwelt gelangen kann.

Gleichermaßen kann es auch sein, dass die Vorrichtung zusätzlich zu den Dosier- und Messstellen noch Probeentnahmestellen aufweist, was bspw. eine leichte Überprüfung des Brauchwassers, insbesondere im laufenden Betrieb, ermöglicht.

Gemäß einer weiteren bevorzugten Ausführungsform der vorliegenden Vorrichtung hat es sich außerdem als vorteilhaft bewährt, wenn die Einstelleinrichtung, insbesondere die Steuerungs- oder Regelungseinrichtung, mit Mitteln zur Erfassung, Verarbeitung und Weiterleitung von Daten, insbesondere Sensoren, verbunden ist.

In diesem Sinne ist es vorzugsweise vorgesehen, dass die Mittel zur Erfassung, Verarbeitung und Weiterleitung von Daten, insbesondere Sensoren, an den übrigen Einrichtungen der Vorrichtung angebracht sind, insbesondere die weiteren Einrichtungen der Vorrichtung mit der Einstelleinrichtung, insbesondere der Steuerungs- oder Regelungseinrichtung, vorzugsweise über Kabel und/oder kabellose Schnittstellen, verbinden.

Im Rahmen der vorliegenden Erfindung kann die Vorrichtung zum Schutz des Brauchwassers vor mikrobieller Belastung einer Abluftreinigungsanlage, insbesondere Nasswäschers, oder zum Schutz des Brauchwassers vor mikrobieller Belastung mehrerer Abluftreinigungsanlagen, insbesondere mehrerer Nasswäscher ausgebildet ist, d.h. zum Schutz mehrerer Brauchwassersysteme vor mikrobieller Belastung.

Wenn die oder zum Schutz des Brauchwassers vor mikrobieller Belastung mehrerer Abluftreinigungsanlagen verwendet wird, hat es bewährt, wenn mehrere Abluftreinigungsanlagen, insbesondere Nasswäscher, an die Vorrichtung angeschlossen sind, insbesondere beispielsweise 2 oder mehr, bevorzugt 3 oder mehr Abluftreinigungsanlagen, insbesondere Nasswäscher, an die Vorrichtung angeschlossen sind.

In diesem Zusammenhang kann es vorgesehen sein, dass die Vorrichtung eine zentrale Einstelleinrichtung, insbesondere eine zentrale Steuerungs- oder Regelungseinrichtung, aufweist, während jede Abluftreinigungsanlage eine Einrichtung zur Messung eines pH-Wertes und mindestens eine Einrichtung zur Dosierung eines pH-Einstellmittels aufweist. Auf diese Ausführungsform lassen sich alle Vorteile, Besonderheiten und Merkmale, welche zuvor im Zusammenhang mit der erfindungsgemäßen Vorrichtung genannt wurden gleichfalls lesen. Insbesondere ist vorzugsweise eine redundante pH-Wertbestimmung vorgesehen.

Gemäß einer alternativen und bevorzugten Ausführungsform ist die erfindungsgemäße Vorrichtung als Zentralanlage ausgebildet, d.h. alle Funktionen der Vorrichtung werden zentral gesteuert bzw. geregelt und auch zentral durchgeführt. Dies bedeutet, dass auch Einrichtung zur Messung eines pH-Wertes und die Einrichtung zur Dosierung eines pH-Einstellmittels sowie gegebenenfalls weitere Mittel und Einrichtungen der Vorrichtung für alle angeschlossenen Ablufreinigungsanlagen, insbesondere Nasswäscher, verwendet werden.

Für diesen Fall hat es sich bewährt, wenn die erfindungsgemäße Vorrichtung so ausgebildet ist, dass eine sequentielle Be- bzw. Abarbeitung des Brauchwassers aus Zu- und Abläufen der jeweiligen Abluftreinigungsanlagen vorgenommen wird. In diesem Zusammenhang wird es bevorzugt, wenn die Vorrichtung ein entsprechendes Mittel zur sequentiellen Be- bzw. Abarbeitung des Brauchwassers, insbesondere eine Ventilschaltung, aufweist.

Weiterhin ist die erfindungsgemäße Vorrichtung im Rahmen dieser besonderen Ausführung vorzugsweise so ausgebildet, dass eine Priorisierung der Be- bzw. Abarbeitung des Brauchwassers in Abhängigkeit von dem pH-Wertmess- bzw. pH-Werteinstellungsbedarfs der jeweiligen einzelnen Anlage vorgenommen werden kann. Es soll im Rahmen der vorliegenden Erfindung also insbesondere eine Berücksichtigung von individuellen Anlagenparametern, wie bspw. zu reinigendes Abluftvolumen, zur Verfügung stehendes Wasservolumen, etc., erfolgen und die Vorrichtung auf Basis dieser Parameter jeweils abgestimmt auf die betreffende Anlage eine Einstellung des pH-Wertes des Brauchwassers durchführen. Vorzugswiese wird die Priorisierung der Be- bzw. Abarbeitung des Brauchwassers mittels der Einstelleinrichtung, insbesondere die Steuerungs- oder Regelungseinrichtung, vorgenommen.

Hierbei wir es weiterhin bevorzugt, wenn die Einstelleinrichtung, insbesondere die Steuerungs- oder Regelungseinrichtung, die Priorisierung der Be- bzw. Abarbeitung des Brauchwassers auf Basis vorab festlegbarer pH-Wertmess- und pH-Werteinstellzeiten der jeweiligen Anlage durchführt. Es ist also vorzugsweise vorgesehen, dass eine Reihenfolge zur Be- bzw. Abarbeitung des Brauchwassers der jeweiligen Anlagen erstellt wird, welche auf den individuellen pH-Wertmess- und pH-Werteinstellzeiten einer jeden an die erfindungsgemäße Vorrichtung angeschlossenen Anlage beruht.

In diesem Sinne hat es sich insbesondere erwiesen, dass die Anzahl der maximal an die Vorrichtung anschließbaren Einzelanlagen von dem Zeitbedarf jeder Einzelanlage für die Messung und Einstellung des pH-Wertes im Brauchwasser der Anlage sowie in diesem Zusammenhang auch von der individuellen, anlagenspezifischen pH-Wert-Konstanz abhängt. Demnach ist es im Rahmen dieser besonderen Ausführungsform der vorliegenden Erfindung insbesondere zweckmäßig, wenn nicht mehr als 10, insbesondere 8, Abluftreinigungsanlagen, insbesondere Nasswäscher, an die Vorrichtung angeschlossen sind. In diesem Zusammenhang sind gleichermaßen die räumlichen Gegebenheiten zur Installation zu berücksichtigen, was für den Fachmann jedoch eine Selbstverständlichkeit ist.

Letztlich ist eine Obergrenze für an die Vorrichtung anschließbare Anlagen nicht eindeutig festgelegt, sondern richtet sich diese nach den jeweiligen spezifischen Parametern der anzuschließenden Anlagen, insbesondere der zeitlichen Konstanz des pH-Wertes im Brauchwasser und dem Zeitbedarf für die entsprechende Einstellung des pH-Wertes des Brauchwassers der jeweiligen betreffenden Anlage. Das heißt, es kann sein, dass auch ein Anschluss von mehr als 10 Abluftreinigungsanlagen, insbesondere Nasswäschern, an die Vorrichtung möglich und zweckdienlich ist, wenn die entsprechenden Einzelanlagen dies gestatten.

Bevorzugt ist daher letztlich lediglich sicherzustellen, dass die sich ergebenden Zeitabstände der pH-Wertmessung und der pH-Werteinstellung der jeweiligen Einzelanlage in der sequentiellen Be- bzw. Abarbeitung mehrerer angeschlossener Anlagen dem Zeitbedarf jeder Einzelanlage genügen, sodass eine sichere pH-Werteinstellung für alle angeschlossenen Anlagen zu jedem Zeitpunkt möglich ist.

Es hat sich jedoch bewährt, wenn 2 bis 6 Abluftreinigungsanlagen, insbesondere Nasswäscher, an die Vorrichtung angeschlossen sind.

Zwischen der alleinigen Verwendung einer zentralen Einrichtung zur Steuerung und Regelung mit an jeder Abluftreinigungsanlage vorgesehenen Einrichtungen zur Bestimmung des pH-Werts und Einrichtungen zur Dosierung eines pH-Einstellmittels und der Verwendung einer Zentralanlage für mehrere Abluftreinigungsanlagen liegen weitere, sinnvolle Ausführungsformen der vorliegenden Erfindung, welche für den Fachmann jedoch offensichtlich sind.

Für weitergehende Einzelheiten zu der erfindungsgemäßen Vorrichtung kann auf die obigen Ausführungen zu dem erfindungsgemäßen Verfahren verwiesen werden, welche in Bezug auf die erfindungsgemäße Vorrichtung entsprechend gelten.

Weiterer Gegenstand der vorliegenden Erfindung - gemäß einem **dritten** Aspekt der vorliegenden Erfindung - ist eine Brauchwasseranlage, insbesondere Abluftreinigungsanlage, vorzugsweise ein Nasswäscher, umfassend eine zuvor beschriebene Vorrichtung.

Für weitere Einzelheiten zu der erfindungsgemäßen Brauchwasseranlage kann auf die obigen Ausführungen zu dem erfindungsgemäßen Verfahren und erfindungsgemäßen Vorrichtung verwiesen werden, welche in Bezug auf die erfindungsgemäße Brauchwasseranlage entsprechend gelten.

Der Gegenstand der vorliegenden Erfindung wird nachfolgend in nichtbeschränkender Weise exemplarisch durch die Figurendarstellung veranschaulicht.

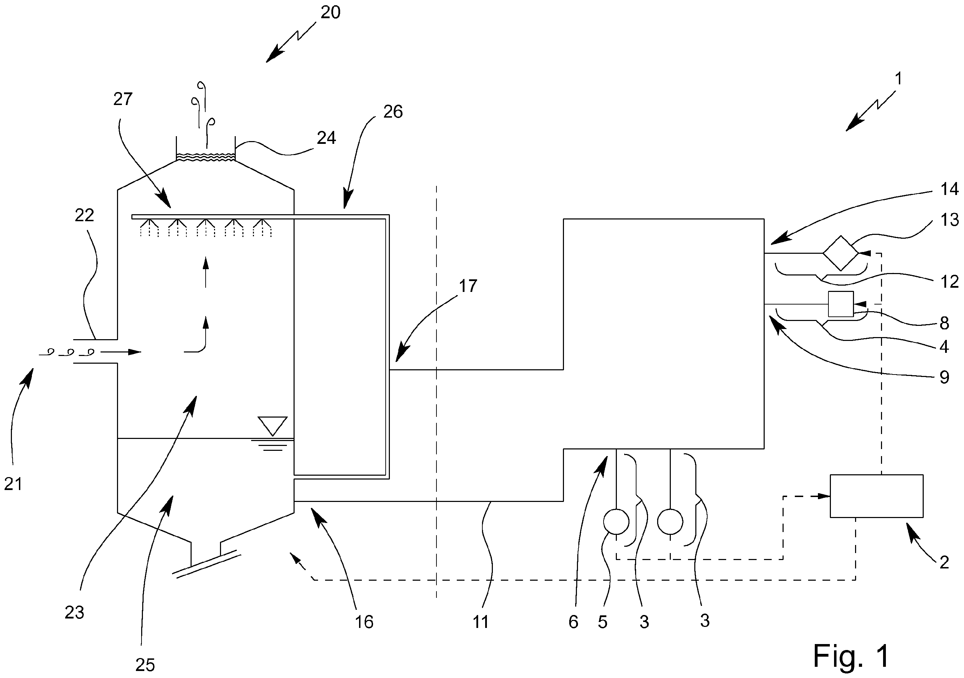

Fig. 1 zeigt einen Überblick über den Aufbau einer erfindungsgemäßen Vorrichtung 1 zur Durchführung des Verfahrens nach der vorliegenden Erfindung. Dabei ist die erfindungsgemäße Vorrichtung 1 an eine beispielshafte Abluftreinigungsanlage 20, insbesondere einen Gaswäscher bzw. Nasswäscher, angeschlossen.

Die Abluftreinigungsanlage 20 ist vorzugsweise ein Gas- bzw. Nasswäscher zur Reinigung von Abluft bzw. Gasen. Vorzugsweise wird in der Abluftreinigungsanlage 20 ein Abluftstrom 21 durch mindestens eine Einlassöffnung 22 in einen Reaktor 23 eingeleitet, in welchem eine Reinigung der Abluft, insbesondere der Gase, stattfindet. Nach erfolgter Reinigung der Abluft, insbesondere nach Entfernung unerwünschter Stoffe oder Partikel aus dem Abluftstrom 21, verlässt der Abluftstrom 21 die Abluftreinigungsanlage 20 vorzugsweise über mindestens eine Auslassöffnung 24. Die Abluftreinigungsanlage wird vorzugsweise mit Brauchwasser 25 betrieben.

In der Abbildung ist eine einfache Darstellung der Abluftreinigungsanlage, insbesondere des Reaktors 23, gezeigt, bei welcher das Brauchwasser 25 stets am Boden des Reaktors 23 gesammelt und im Kreislauf wiederverwendet wird. Aus dem Reaktor 23 wird das Brauchwasser 25 über eine Förderleitung 26 zu Verdüsungseinrichtungen 27 geleitet, welche sich vorzugsweise im oberen Teil der Abluftreinigungsanlage 20 beziehungsweise in der Nähe der Auslassöffnung 24 befinden und durch welche das Brauchwasser 25 entgegen dem Abluftstrom 21 in den Reaktor 23 eingebracht wird, insbesondere in feiner Verteilung, vorzugsweise eingedüst wird. Das Brauchwasser 25 absorbiert dann Stoffe oder Partikel aus dem Abluftstrom 21 und wird wieder im unteren Teil des Reaktors 23, insbesondere nach Passieren des Abluftstroms 21, aufgefangen und weiterverwendet. Die Abluftreinigungsanlage 20 wird vorzugsweise im Batch-Betrieb über mehrere Tage, insbesondere über mehrere Wochen, verwendet, so dass das Brauchwasser 25 erst bedarfsweise bei starker Verunreinigung oder turnusmäßig nach der vorgesehenen Betriebsdauer ausgetauscht wird.

Die Vorrichtung 1 weist vorzugsweise eine Einstelleinrichtung 2 sowie zwei Einrichtungen 3 zur pH-Wertmessung und eine Einrichtung 4 zur Dosierung des pH-Einstellmittels auf. Die zwei Einrichtungen 3 zur pH-Wertmessung erlauben eine sichere redundante Messung des pH-Wertes.

Die Einstelleinrichtung 2 kann insbesondere als Steuerungs- oder Regelungseinrichtung, bspw. insbesondere als, vorzugsweise mindestens, ein PDI-Regler, ausgebildet sein und liegt vorzugsweise in Form einer elektronischen Datenverarbeitungseinrichtung, bevorzugt in Form eines PCs, Notebooks, Tablet-PCs, vor. Über die Einstelleinrichtung 2 können vorzugsweise zunächst bspw. Führungsgrößen, Regelgrößen und/oder Soll-Größen zur Durchführung des erfindungsgemäßen Verfahrens festgelegt werden. Darüber hinaus können mittels der Einstelleinrichtung 2 Ist-Größen gemessen und gegenüber den festgelegten Größen auftretende Regelabweichungen bestimmt werden. Gemäß einer bevorzugten Ausführungsform können mit Hilfe der Einstelleinrichtung 2 die Speicherung von Messdaten vorgenommen sowie die Durchführung von vorab definierten Maßnahmen im Rahmen des erfindungsgemäßen Verfahrens veranlasst werden. Eine beispielhafte vorab definierte Maßnahme kann bspw. darin bestehen, dass bei einer eventuellen Regelabweichung zwischen Soll- und Ist-pH-Wert eine Dosierung des pH-Einstellmittels durch die Einstelleinrichtung 2 ausgelöst wird.

Darüber hinaus weisen die Einrichtungen 3 zur pH-Wertmessung gemäß Fig. 1 je ein Mittel 5 zur Messung des pH-Wertes sowie eine Messstelle 6 auf. Die Einrichtungen 3 zur Messung des pH-Wertes sind bevorzugt mit der Einstelleinrichtung 2 verknüpft, insbesondere so, dass durch die Mittel 5 gemessene pH-Werte durch die Einstelleinrichtung verarbeitet werden können.

Gemäß weiter bevorzugter Ausführungsformen der erfindungsgemäßen Vorrichtung 1 kann es vorgesehen sein, dass das Mittel 5 zur Messung des pH-Wertes eine pH-Elektrode ist, insbesondere wobei die pH-Elektrode als Glas-pH-Elektrode oder Ionensensitiver Feldeffekttransistor (ISFET) ausgebildet ist. Weiterhin kann es auch vorgesehen sein, dass die pH-Elektrode eine integrierte Referenzelektrode und/oder eine integrierte Kalibration aufweist. Gleichermaßen kann es aber auch zweckmäßig sein, dass die pH-Elektrode eine externe Referenzelektrode bzw. Kalibration erfordert. In jedem Fall kann anhand der Referenzelektrode bzw. Kalibration der pH-Elektrode die Richtigkeit der pH-Wert-Messung bzw. eine Korrektur der Einstellung der pH-Elektrode, bspw. bei Feststellung von größeren bzw. systematischen Messabweichungen, leicht und unkompliziert vorgenommen werden.

Darüber hinaus ist es erfindungsgemäß bevorzugt, wenn jeder Messstelle 6 ein Mittel 5 zur Messung des pH-Wertes zugeordnet ist.

Gemäß der Ausführungsform der Vorrichtung 1 in der Fig. 1 weist die Einrichtung 4 zur Dosierung des pH-Einstellmittels vorzugsweise ein Mittel 8 zur Dosierung des pH-Einstellmittels sowie eine Dosierstelle 9 auf. Diesbezüglich wird es besonders bevorzugt, wenn das Mittel 8 zur Dosierung des pH-Einstellmittels eine Pumpe, insbesondere eine Dosierpumpe, ist. Insbesondere die Verwendung von Dosierpumpen ermöglicht dabei eine bedarfsgenaue, diskontinuierliche sowie zuverlässige Dosierung des pH-Einstellmittels im Rahmen der Durchführung des erfindungsgemäßen Verfahrens.

Nicht zuletzt weist die gemäß Fig. 1 dargestellte bevorzugte Ausführungsform der erfindungsgemäßen Vorrichtung 1 eine Einrichtung 12 zur Dosierung eines Biozids auf, welches wiederum selbst mindestens ein Mittel 13 zur Dosierung des Biozids sowie eine Dosierstelle 14 aufweist. Es hat sich dabei im Rahmen der vorliegenden Erfindung als besonders effizient erwiesen, wenn die Dosierungsmittel 8 und 13 im Wesentlichen gleich ausgebildet bzw. aufgebaut sind. Dementsprechend ist es im Rahmen der vorliegenden Erfindung vorzugsweise vorgesehen, dass das Dosierungsmittel 13 ebenfalls eine Pumpe, insbesondere eine Dosierpumpe, ist.

Des Weiteren sind die Messeinrichtung 3 und Dosiereinrichtung 4 gemäß der in Fig. 1 dargestellten bevorzugten Ausführung der erfindungsgemäßen Vorrichtung 1 entlang einer Durchflussleitung 11 angeordnet. Diese Durchflussleitung 11 weist zudem einen Zulauf 16 sowie einen Ablauf 17 auf. Gemäß dieser bevorzugten Ausführung der erfindungsgemäßen Vorrichtung 1 ist der Zulauf 16 der Vorrichtung 1 am unteren Ende, d. h. dem Kreislaufbecken, der Abluftreinigungsanlage, insbesondere des Nasswäschers, angeordnet. Demgegenüber ist der Ablauf 17 der Vorrichtung 1 an der Umlaufleitung bzw. der Förderleitung 26 der Abluftreinigungsanlage, insbesondere des Nasswäschers, angeordnet. In der Umlaufleitung bzw. der Förderleitung 26 wird die Waschlösung, welche zur Reinigung der schadstoffbelasteten Ab- bzw. Rauchgasen eingesetzt wird, aus dem Kreislaufbecken zurück in den Flüssigkeitsverteiler gepumpt. Anhand dieser Anordnung des Zulaufs 16 und Ablaufs 17 ist somit zu jeder Zeit sichergestellt, dass das Brauchwasser im Kreislaufbecken einen pH-Wert im erfindungsgemäß vorgegebenen pH-Wertbereich, d. h. im Bereich von mehr als pH 10 bzw. weniger als pH 4, aufweist.

Ein besonderer Vorteil der erfindungsgemäßen Vorrichtung 1 ist darin zu sehen, dass die Vorrichtung 1 - mit Ausnahme der Durchflussleitung 11 sowie gegebenenfalls Fördereinrichtungen 18 - problemlos auf einer Wandtafel untergebracht werden kann. Die erfindungsgemäße Vorrichtung 1 eignet sich daher in besonderer Weise zur Nachrüstung von bereits bestehenden Abluftreinigungsanlagen 20.

Zur Durchführung des erfindungsgemäßen Verfahrens bewirkt die Einstelleinrichtung 2 gemäß der in Figur 1 dargestellten Ausführungsform, ausgehend von den Messwerten, welche durch die Messeinrichtungen 3 ermittelt werden, stets eine ausreichende Einspeisung des pH-Einstellmittels durch die Dosiereinrichtung 4 in den Förderkreislauf der Vorrichtung 1. Das auf pH-Werte von weniger als pH 4 oder mehr als pH 10 eingestellte Brauchwasser wird direkt in die Umlaufleitung 26 eingespeist, so dass vor allem eine effiziente Reinigung schadstoffbelasteter Abgase bzw. Rauchgase sichergestellt ist und gleichzeitig gewährleistet wird, dass auch nach Neutralisation eventueller basen- bzw. säurebildender Gase im schadstoffbelasteten Abgas noch ausreichend Mengen des pH-Einstellmittels im Brauchwasser vorhanden sind, um letztlich auch den pH-Wert des Kreislaufbeckens im gewünschten Bereich von unter pH 4 bzw. über pH 10 zu halten. Auf diese Weise gewährleistet die erfindungsgemäße Vorrichtung 1 den einwandfreien und hygienischen Betrieb von Abluftreinigungsanlagen, insbesondere Nasswäschern bzw. Gaswäschern.

Ein Dosieren des Biozids mit Hilfe der Dosiereinrichtung 12 in das Brauchwasser 25 wird vorzugsweise lediglich dann ausgelöst, wenn im Brauchwasser ein anhaltendes Vorliegen, insbesondere über einen Zeitraum von mehr als 5 min, insbesondere mehr als 15 min, vorzugsweise mehr als 30 min, eines pH-Wertes von mehr als pH 4 oder weniger als pH 10 ermittelt wird.

Gleichfalls kann es jedoch auch vorgesehen sein, dass die Zeitdauer, in welcher pH-Werte in Bereichen von pH 4 oder mehr bzw. pH 10 oder weniger toleriert werden, ohne dass eine Bioziddosierung ausgelöst wird, bedarfsweise eingestellt wird. Das heißt, dass dort, wo es durch den Benutzer bzw. die Rahmenbedingungen, unter denen das erfindungsgemäße Verfahren durchgeführt wird, gefordert wird, kann das Dosieren des Biozids in das Brauchwasser 25 bspw. auch schon innerhalb der ersten 5 min ab Vorliegen eines pH-Werts von pH 4 oder mehr bzw. pH 10 oder weniger ausgelöst werden.

Das heißt, die erfindungsgemäße Vorrichtung 1 ist so ausgebildet, dass lediglich im Störfall bzw. Notfall die Dosierung eines Biozids erfolgt, wobei durch den Benutzer der Vorrichtung festgelegt werden kann, wie ein Störfall bzw. Notfall zu definieren ist. Während des regulären Betriebs der Anlage soll eine Bioziddosierung hingegen vorzugsweise nicht erfolgen.

Um sicher zu gehen, dass die Einstellung und Ermittlung des Ist-pH-Wertes, insbesondere im Vergleich zum vorgegebenen bzw. festgelegten Soll-pH-Wert, durch die Messmittel 5 an den Messstellen 6 zuverlässig sowie möglichst fehlerfrei verläuft, hat es sich im Rahmen der vorliegenden Erfindung weiterhin bewährt, mindestens einen, vorzugsweise zwei, Toleranzbereiche für pH-Wertabweichungen festzulegen.

Hierbei bezieht sich der erste Toleranzbereich A auf die Abweichung, insbesondere in Form einer Differenz, zwischen dem festgelegten Soll-pH-Wert und dem gemessenen Ist-pH-Wert, welche vorzugsweise durch die Einstelleinrichtung 2 mit Hilfe der Einrichtungen 3 zur pH-Wertmessung ermittelt wird.

Der zweite Toleranzbereich B bezieht sich demgegenüber auf eventuelle Abweichungen, insbesondere in Form von Differenzen, der gemessenen Ist-pH-Werte untereinander, welche zwischen den einzelnen Messeinrichtungen 3 auftreten können. Durch die Ermittlung und Kontrolle dieser sollen insbesondere bspw. Funktionsfehler der Messmittel 5 frühzeitig erkannt und behoben werden können.

Die Vorrichtung 1 ist zu Durchführung des erfindungsgemäßen Verfahrens nun vorzugsweise so eingestellt, dass das Dosieren des pH-Einstellmittels in das Brauchwasser durch Verlassen des Toleranzbereichs A oder das Erreichen eines absoluten pH-Werts von mehr als pH 4 oder weniger als pH 10 ausgelöst wird. Gleichermaßen ist die erfindungsgemäße Vorrichtung 1 vorzugsweise so ausgebildet, dass das Dosieren des pH-Einstellmittels in das Brauchwasser 25 bei Erreichen des Soll-pH-Wertes beendet und/oder bei Einhalten des Soll-pH-Wertes, insbesondere unter Berücksichtigung des Toleranzbereichs A, ausgesetzt wird.

Sollte insbesondere eine Zugabe des pH-Einstellmittels, wider Erwarten, ausfallen, so erfolgt, wie oben beschrieben, das Zudosieren des Biozids in das Brauchwasser 25. In diesem Zusammenhang kann es weiterhin vorgesehen sein, dass das Dosieren des Biozids in das Brauchwasser bei Erreichen einer wirksamen, insbesondere antimikrobiell wirksamen, vorzugsweise antibakteriell wirksamen Konzentration des Biozids im Brauchwasser 25 beendet wird.

Somit kann mittels der erfindungsgemäßen Vorrichtung 1 selbst im Störfall der hygienische Betrieb von Abluftreinigungsanlagen wie Nasswäschern sicher gewährleistet werden und eine eventuelle Bildung von gesundheitsbedenklichen Mikroorganismen kann weitestgehend ausgeschlossen werden.

Nicht zuletzt ist die Einstelleinrichtung 2, wie bereits erwähnt, in der Lage die Daten, welche im Zuge der Durchführung des erfindungsgemäßen Verfahrens anfallen, aufzuzeichnen, zu speichern sowie für Datenauswerteprozesse in einer verarbeitbaren Form zur Verfügung zu stellen.

Zur Sicherung sowie Überprüfung bzw. gegebenenfalls Wiederherstellung der vorgesehenen Funktionsweise kann es weiterhin, gemäß einer nicht dargestellten Ausführung der erfindungsgemäßen Vorrichtung 1, vorteilhaft sein, dass der Vorrichtung 1 in vorab einstellbaren Zeitabständen sogenannte Modellbäder mit konstantem und bekannten pH-Wert zur Kontrolle der Genauigkeit der pH-Wertmesseinrichtung 3 zugeführt werden. Gleichermaßen kann es auch sein, dass der Vorrichtung 1 in vorab einstellbaren Zeitabständen pH-Pufferlösungen zur Überprüfung und ggf. automatischen bzw. halbautomatischen oder manuellen Kalibration der pH-Wertmesseinrichtung 3 zugeführt werden. Die Zuführung der Lösungen erfolgt jeweils über eine kurze Zeitdauer und bedeutet lediglich eine kurze, unkritischen Unterbrechung des Förderkreislaufes zwischen Vorrichtung 1 und der Anlage 20.

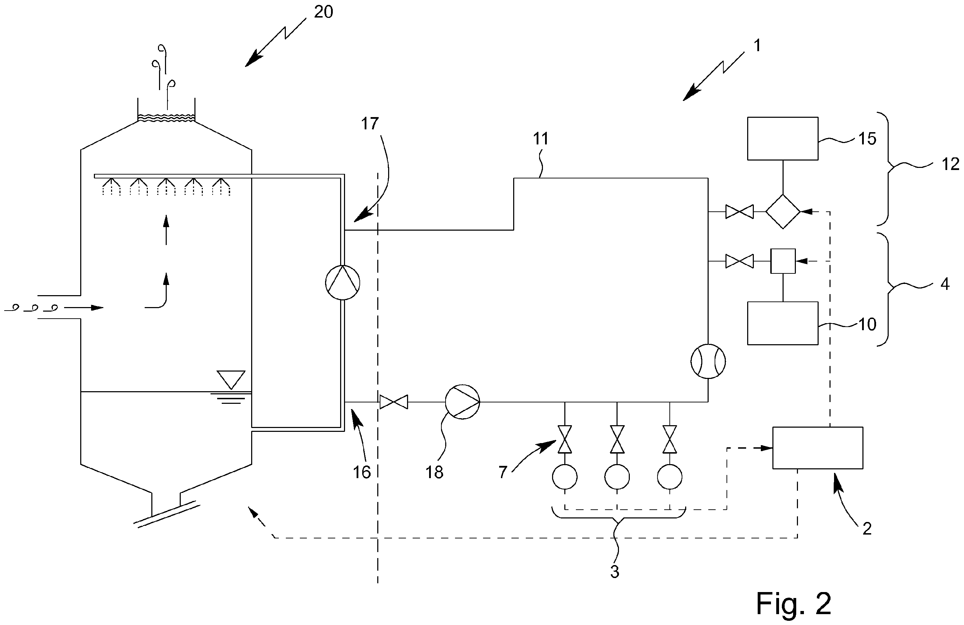

Die Fig. 2 zeigt ebenfalls einen Überblick über den Aufbau einer erfindungsgemäßen Vorrichtung 1, in diesem Fall gemäß einer bevorzugten Ausführungsform zur Durchführung des Verfahrens nach der vorliegenden Erfindung.

Im Unterschied zur Ausführung der Vorrichtung 1 gemäß Fig. 1 befinden sich der Zulauf 16 sowie der Ablauf 17 gemäß der Ausführungsform in der Fig. 2 an der Umlaufleitung der beispielhaften Abluftreinigungsanlage 20, insbesondere des Nasswäschers. Diese alternative Anordnung bietet den Vorteil, dass die Anschlussstellen der Vorrichtung örtlich vergleichsweise nah beieinander angebracht sind, so dass eine sehr kompakte Ausgestaltung der Vorrichtung 1 möglich wird. Generell kann es bspw. bevorzugt sein, dass die Vorrichtung 1 als Wandtafel ausgebildet ist.

Gemäß der bevorzugten Ausführungsform der erfindungsgemäßen Vorrichtung in Fig. 2 weist diese nunmehr auch drei Einrichtungen 3 zur pH-Wert-Messung auf, es könnten jedoch gleichermaßen auch vier oder beliebig viele mehr sein. Die Einrichtungen 3 zur pH-Wert-Messung sind darüber hinaus mit Ventilen 7 ausgestattet, so dass die Mittel 5 zur Messung des pH-Wertes flexibel an den Förderkreislauf angeschlossen sowie auch von diesem getrennt werden können. Dies ist bspw. insbesondere vorteilhaft für Wartungsarbeiten an den Messmitteln 5, welche dann sogar im laufenden Betrieb durchgeführt werden können.

Darüber hinaus weisen die Einrichtung 4 zur Dosierung des pH-Einstellmittels sowie die Einrichtung 12 zur Dosierung des Biozids im Rahmen der Ausführungsform der Vorrichtung 1 gemäß der Fig. 2 jeweils ein Mittel 10 und 15 zur Bevorratung des pH-Einstellmittels bzw. des Biozids auf. Darüber hinaus sind auch die Einrichtungen 4 und 12 jeweils mit Absperrmitteln 7, insbesondere Ventilen, ausgestattet, so dass auch diese leicht sowie bedarfsweise vom Förderkreislauf der Vorrichtung 1 abgetrennt bzw. an diesen angeschlossen werden können. Damit werden insbesondere kleinere Wartungsarbeiten an den Einrichtungen möglich, etwa ein Nachfüllen des pH-Einstellmittels oder des Biozids oder Überprüfungen der Dosiermittel 8 und 13, insbesondere der Pumpen.

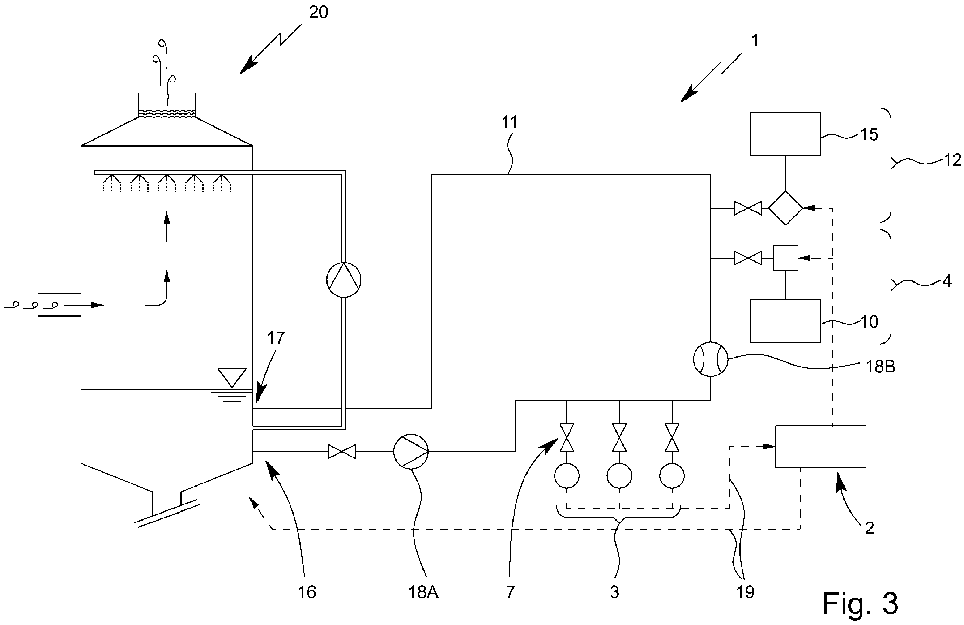

Um darüber hinaus eine vorzugsweise gleichmäßige Förderung des Brauchwassers durch die Vorrichtung 1 zu garantieren, hat es sich für diese Ausführung der Vorrichtung 1 bewährt, wenn eine Fördereinrichtung 18 in der Durchflussleitung 11 angeordnet ist. Die Fördereinrichtung 18 ist dabei vorzugsweise eine Pumpe. Im Rahmen einer weiter bevorzugten Ausführungsform der erfindungsgemäßen Vorrichtung 1, wie sie bspw. in Fig. 3 dargestellt ist, kann es auch vorgesehen sein, dass die Fördereinrichtung eine Pumpe 18A sowie einen Durchflussmesser 18B aufweist. Gleichfalls kann es jedoch auch sein, dass die Durchflussleitung 11 nur einen Durchflussmesser 18B aufweist und die Förderung des Brauchwassers durch eine Fördereinrichtung der Abluftreinigungsanlage, insbesondere des Nasswäschers, erfolgt, deren Förderleistung so groß ist, dass der Förderkreislauf der Vorrichtung 1 sicher mitabgedeckt werden kann.

Schließlich zeigt Fig. 3 einen weiteren Überblick über den Aufbau einer erfindungsgemäßen Vorrichtung1 gemäß einer weiteren bevorzugten Ausführungsform zur Durchführung des Verfahrens nach der vorliegenden Erfindung.

Gemäß dieser Ausführungsform der erfindungsgemäßen Vorrichtung 1 sind der Zulauf 16 sowie der Ablauf 17 jeweils am Kreislaufbecken der beispielhaften Abluftreinigungsanlage, insbesondere des Nasswäschers, angeordnet. Hierdurch kann ebenfalls eine vorteilhafte, da sehr kompakte, Anordnung der Vorrichtung 1 erreicht werden, bspw. wiederum in Form einer Wandtafel, insbesondere in unmittelbarer Nähe der Abluftreinigungsanlage. Außerdem kann mittels dieser Anordnung des Zulaufes 16 und Ablaufes 17 besonders effizient und direkt gewährleistet werden, dass der pH-Wert des Brauchwassers im Kreislaufbecken stets im vorgegebenen Bereich, d. h. in einem Bereich von mehr als pH 10 bzw. weniger als pH 4, liegt. Darüber hinaus hat es sich als vorteilhaft erwiesen, wenn die Vorrichtung 1 mehrere Mittel 19 zur Erfassung, Verarbeitung und Weiterleitung von Daten, insbesondere Sensoren, an den übrigen Einrichtungen der Vorrichtung 1 aufweist. Dabei kann es noch weiter bevorzugt sein, wenn die Mittel 19 zur Erfassung, Verarbeitung und Weiterleitung von Daten, insbesondere Sensoren, die übrigen Einrichtungen der Vorrichtung 1 mit der Einstelleinrichtung 2, vorzugsweise über Kabel und/oder kabellose Schnittstellen, verbinden.

Auf diese Weise wird es insbesondere möglich, die Einstelleinrichtung 2 als Steuerung bzw. vorzugsweise als Regelung auszubilden. Wenn die Einrichtung 2 eine Regelungseinrichtung ist, wird es außerdem bevorzugt, wenn zwischen den Messeinrichtungen 3 bzw. dem Durchflussmesser 18B und der Einrichtung 2 sowie den Dosiereinrichtungen 4 und 12 bzw. der Fördereinrichtung 18A Regelkreisläufe ausgebildet sind. In diesen Regelkreisläufen sollen dann insbesondere auf der Basis vorgegebener Regelgrößen, welche bspw. eine Förderrate oder ein pH-Wert sein können, Rückkopplungen zwischen den Messeinrichtungen und Dosiereinrichtungen bzw. der Fördereinrichtung durch einen entsprechenden Regelungsvorgang, den die Einrichtung 2 reguliert, bestehen.

In diesem Sinne kann es erfindungsgemäß bspw. vorgesehen sein, dass die Vorrichtung 1, insbesondere auf Basis der Einstelleinrichtung 2, so konfiguriert ist, dass mittels eines Vergleichswertes, insbesondere in Form einer Differenz, vorzugsweise unter der Berücksichtigung der spezifischen, vorab festgelegten Toleranzbereiche zwischen den gemessenen Ist-pH-Werten sowie, vorzugsweise einem gemittelten, Ist-pH-Wert und dem Soll-pH-Wert, eine Rückkopplung, insbesondere unter Bildung einer zeitabhängigen Stellgröße, zur Einstellung, insbesondere Regelung, des pH-Wertes erfolgt.

Hierbei hat es sich als vorteilhaft erwiesen, wenn bei Ermittlung eines Vergleichswerts, insbesondere einer Differenz, zwischen Ist-pH-Wert und Soll-pH-Wert innerhalb des Toleranzbereichs A durch die Einstelleinrichtung 2 eine Gegenkopplung, insbesondere unter Bildung einer negativen Stellgröße, vorzugsweise mit Wirkung auf das Dosieren des pH-Einstellmittels in das Brauchwasser, erfolgt.

Gleichermaßen hat es sich bewährt, wenn bei Ermittlung eines Vergleichswerts, insbesondere einer Differenz, zwischen Ist-pH-Wert und Soll-pH-Wert außerhalb des Toleranzbereichs A durch die Einstelleinrichtung 2 eine Mitkopplung, insbesondere unter Bildung einer positiven Stellgröße, vorzugsweise mit Wirkung auf das Dosieren des pH-Einstellmittels in das Brauchwasser, erfolgt.

In diesem Falle dient der Regelung also jeweils der pH-Wert als Stellgröße, so dass im Zuge einer Gegenkopplung letztlich eine geringere Menge des pH-Einstellmittels dosiert wird sowie im Rahmen einer Mitkopplung im Endeffekt eine größere Menge des pH-Einstellmittels in das Brauchwasser eingebracht wird, um insbesondere eine Regulierung des Ist-pH-Wertes auf den Soll-pH-Wert zu erreichen bzw. beizubehalten.

Auf Basis dieses Regelungsvorgangs kann die Einstellung des pH-Werts mittels der erfindungsgemäßen Vorrichtung 1 im Rahmen des erfindungsgemäßen Verfahrens besonders genau sowie bedarfsgerecht gesteuert werden. In ähnlicher Weise wie die Dosierung des pH-Einstellmittels kann die Einstelleinrichtung 2 nun insbesondere auch auf die Fördereinrichtung 18A bzw. die Dosierung des Biozids regulieren, sodass ein besonders benutzerfreundliches, da weitestgehend automatisiertes, Verfahren und eine vergleichsweise leicht zu bedienende Vorrichtung im Rahmen der vorliegenden Erfindung erhalten werden können.

**Bezugszeichenliste:**

| | | | |
|---|---|---|---|
| 1 | Vorrichtung | 14 | Dosierstelle |
| 2 | Einstelleinrichtung | 15 | Mittel zur Bevorratung des Biozids |
| 3 | Einrichtung zur pH-Wertmessung | | |
| 4 | Einrichtung zur Dosierung des pH-Einstellmittels | 16 | Zulauf |
| | | 17 | Ablauf |
| 5 | Mittel zur Messung des pH-Wertes | 18 | Fördereinrichtung |
| | | 18A | Pumpe |
| 6 | Messstelle | 18B | Durchflussmesser |
| 7 | Ventil | 19 | Mittel zur Erfassung, Verarbeitung und Weiterleitung von Daten |
| 8 | Mittel zur Dosierung des pH-Einstellmittels | | |
| | | 20 | Abluftreinigungsanlage |
| 9 | Dosierstelle | 21 | Abluftstrom |
| 10 | Mittel zur Bevorratung des pH-Einstellmittels | 22 | Einlassöffnung |
| | | 23 | Reaktor |
| 11 | Durchflussleitung | 24 | Auslassöffnung |
| 12 | Einrichtung zur Dosierung des Biozids | 25 | Brauchwasser |
| | | 26 | Förderleitung |
| 13 | Mittel zur Dosierung des Biozids | 27 | Verdüsungseinrichtung |

## Patentansprüche

1. Verfahren zum Schutz von Brauchwasser, insbesondere Brauchwassersystemen, vor mikrobieller Belastung, insbesondere in Abluftreinigungsanlagen,
**dadurch gekennzeichnet,**
**dass** der pH-Wert des Brauchwassers auf einen pH-Wert von weniger als pH 4 oder mehr als pH 10 eingestellt wird.

2. Verfahren nach Anspruch 1, **dadurch gekennzeichnet, dass** der pH-Wert durch eine Steuerung oder Regelung, insbesondere einen Steuerungs- oder Regelungsvorgang, vorzugsweise einen zumindest im Wesentlichen automatisierten Steuerungs- oder Regelungsvorgang, eingestellt wird.

3. Verfahren nach Anspruch 1 oder 2, **dadurch gekennzeichnet, dass** für die Einstellung des pH-Wertes ein Soll-pH-Wert festgelegt wird.

4. Verfahren nach einem der vorangehenden Ansprüche, **dadurch gekennzeichnet, dass** für die Einstellung des pH-Wertes der pH-Wert des Brauchwassers, insbesondere mindestens ein Ist-pH-Wert des Brauchwassers, gemessen wird.

5. Verfahren nach einem der vorangehenden Ansprüche, **dadurch gekennzeichnet, dass** für die Einstellung des pH-Wertes mindestens 2, insbesondere 2 bis 10, vorzugsweise 2 bis 5, bevorzugt 2, pH-Werte des Brauchwassers, insbesondere Ist-pH-Werte des Brauchwassers, gemessen werden.

6. Verfahren nach einem der vorangehenden Ansprüche, **dadurch gekennzeichnet, dass** für die Einstellung des pH-Wertes, insbesondere bei Messung von pH-Werten von pH 4 oder mehr oder pH 10 oder weniger, ein pH-Einstellmittel in das Brauchwasser, insbesondere diskontinuierlich, dosiert wird.

7. Verfahren nach Anspruch 6, **dadurch gekennzeichnet, dass** das pH-Einstellmittel eine Säure oder Base ist.

8. Verfahren nach Anspruch 7, **dadurch gekennzeichnet, dass** die Säure ausgewählt ist aus der Gruppe von anorganischen Säuren, organischen Säuren, deren Mischungen, insbesondere Halogensäuren, Stickstoffsäuren, Phosphorsäuren, Schwefelsäuren, kurzkettigen Carbonsäuren, kurzkettigen Halogencarbonsäuren, deren Mischungen, vorzugsweise Salzsäure, Salpetersäure, Phosphorsäure, Schwefelsäure, Ameisensäure, Essigsäure, deren Mischungen.

9. Verfahren nach Anspruch 7, **dadurch gekennzeichnet, dass** die Base ausgewählt ist aus der Gruppe von anorganischen Basen, organischen Basen, deren Mischungen, insbesondere Alkalimetallhydroxiden, Erdalkalimetallhydroxiden, Alkalimetallhydrogencarbonaten, Alkalimetallcarbonaten, Erdalkalimetallcarbonaten, Stickstoffbasen, deren Mischungen, vorzugsweise Natriumhydroxid, Kaliumhydroxid, Calciumhydroxid, Natriumhydrogencarbonat, Kaliumhydrogencarbonat, Natriumcarbonat, Kaliumcarbonat, Calciumcarbonat, Ammoniak, Ammoniakwasser, deren Mischungen.

10. Verfahren nach einem der vorangehenden Ansprüche, **dadurch gekennzeichnet, dass** ein Biozid in das Brauchwasser, insbesondere diskontinuierlich, dosiert werden kann.

11. Vorrichtung (1) zum Schutz von Brauchwasser, insbesondere Brauchwassersystemen, vor mikrobieller Belastung, insbesondere zum Einbau in bzw. Anbau an Abluftreinigungsanlagen,
**dadurch gekennzeichnet,**
**dass** die Vorrichtung (1) eine Einstelleinrichtung (2), insbesondere eine Steuerungs- oder Regelungseinrichtung, eine Einrichtung (3) zur Messung eines pH-Wertes, und mindestens eine Einrichtung (4) zur Dosierung eines pH-Einstellmittels aufweist.

12. Vorrichtung (1) nach einem der vorangehenden Ansprüche, **dadurch gekennzeichnet, dass** die Vorrichtung (1) mindestens 2, insbesondere 2 bis 10, vorzugsweise 2 bis 5, bevorzugt 2, Einrichtungen (3) zur Messung des pH-Wertes aufweist.

13. Vorrichtung (1) nach einem der vorangehenden Ansprüche, **dadurch gekennzeichnet, dass** die Vorrichtung eine Einrichtung (12) zur Dosierung eines Biozids aufweist.

14. Vorrichtung (1) nach einem der vorangehenden Ansprüche, **dadurch gekennzeichnet, dass** die Vorrichtung (1), insbesondere mindestens, zwei Anschlussstellen (16, 17), vorzugsweise einen Zulauf (16) und einen Ablauf (17), bevorzugt zum Anschluss an ein Brauchwassersystem, insbesondere eine Abluftreinigungsanlage, aufweist.

15. Brauchwasseranlage, insbesondere Abluftreinigungsanlage, vorzugsweise Nasswäscher, umfassend eine Vorrichtung nach einem der Ansprüche 11 bis 14.
